# EUROPEAN PATENT APPLICATION

(11) **EP 4 357 973 A1**
(43) Date of publication of application: **24.04.2024**
(21) Application number: 21950402.4
(22) Date of filing: 19.07.2021
(51) Int. Cl.: G06N 3/04, G06N 3/063

(54) **DATA FORMAT CONVERSION APPARATUS AND METHOD**

(71) Applicant: Huawei Technologies Co., Ltd., Shenzhen, Guangdong 518129 (CN)
(72) Inventor: LIU, Leilei, Shenzhen, Guangdong 518129 (CN); BAI, Mengjie, Shenzhen, Guangdong 518129 (CN); YUAN, Honghui, Shenzhen, Guangdong 518129 (CN)
(74) Representative: Körber, Martin Hans
(86) International application number: PCT/CN2021/107113
(87) International publication number: WO 2023/000136

(57) **Abstract**

This application relates to a data format conversion apparatus and method. The data format conversion apparatus is located in a DMA module of a processor. A data format that is of tensor data and that is supported by the processor is a first data format. The DMA module includes: a DMA controller DMAC. If a second data format of tensor data stored in an external memory is different from the first data format, the DMAC is configured to convert, in a process of transmitting to-be-converted tensor data between a memory of the processor and the external memory, the to-be-converted tensor data from the first data format into the second data format or from the second data format into the first data format, to obtain converted tensor data. Data transmission overheads, offline preprocessing time overheads, vector calculation time, and hardware overheads in the conventional technology are reduced, and efficiency of running a neural network model on a neural network processor is improved, thereby facilitating popularization and use of the processor

## Description

### TECHNICAL FIELD

This application relates to the field of artificial intelligence technologies, and in particular, to a data format conversion apparatus and method.

### BACKGROUND

A convolutional neural network is widely used in image processing, audio recognition, semantic recognition, intelligent recommendation, and other fields and has excellent performance. Therefore, the convolutional neural network becomes a research hotspot of artificial intelligence. The rapid development of artificial intelligence applications in various fields proposes a new requirement for hardware computing power. A neural network processing unit (Neural Network Processing Unit, NPU) is a processor configured to perform convolutional neural network calculation. In recent years, the NPU is continuously developed, and efficiency of performing convolutional neural network calculation by the NPU is continuously improved. In this background, using the NPU to accelerate an operation of the convolutional neural network, improve running efficiency of an application related to the convolutional neural network, and shorten execution time of the application related to the convolutional neural network becomes a current research hotspot of the NPU.

When the operation of the convolutional neural network is implemented on the NPU, an important step is data input and output. On a software framework Caffe, image data is usually transmitted between layers of a neural network in a form of a 4-dimensional vector, and the form of the 4-dimensional vector may be NCHW (num, channel, height, width). For other software frameworks such as TensorFlow and PyTorch, a format of image data used to implement the operation of the convolutional neural network may be NCHW or NHWC.

Because different hardware architectures may be suitable for different data formats, when image data is processed in different hardware architectures, formats of the image data used in the different hardware architectures may be different. To improve an operation speed of the convolutional neural network, a data format that is more suitable for a hardware architecture needs to be used to reduce operation time. For example, when a graphics processing unit (English: graphics processing unit, GPU for short) architecture performs calculation, an NHWC data format is more suitable. If the data format is NCHW, the data format may be first converted from NCHW to NHWC before calculation is performed. In this process, data transmission overheads are generated in a reading/writing process during the data format conversion. In addition, vector calculation needs to be performed during the data format conversion, and the vector calculation process increases power consumption overheads of hardware.

### SUMMARY

In view of this, a data format conversion apparatus and method are provided, to reduce data transmission overheads, offline preprocessing time overheads, and vector calculation time and hardware overheads in a conventional technology, and improve efficiency of running a neural network model on a neural network processor. This facilitates popularization and use of the processor.

According to a first aspect, an embodiment of this application provides a data format conversion apparatus. The data format conversion apparatus is located in a direct memory access DMA module of a processor. A data format that is of tensor data and that is supported by the processor is a first data format. The DMA module includes: a DMA controller DMAC. If a second data format of tensor data stored in an external memory is different from the first data format, the DMAC is configured to convert, in a process of transmitting to-be-converted tensor data between a memory of the processor and the external memory, the to-be-converted tensor data from the first data format into the second data format or from the second data format into the first data format, to obtain converted tensor data. The first data format and the second data format respectively indicate a placement manner of the to-be-converted tensor data or the converted tensor data when the to-be-converted tensor data or the converted tensor data is stored.

According to the data format conversion apparatus in this embodiment of this application, data format conversion is implemented in a process of transmitting data between the memory and the external memory. Compared with a manner in which original data is first read from the external memory to a buffer of a vector processing unit before an operation is performed, converted data is output to the external memory after the vector processing unit converts a data format of the original data, and the data is read from the external memory again during the operation in the conventional technology, the data format conversion apparatus in this embodiment of this application can reduce data transmission overheads and vector calculation time and hardware overheads, and improve efficiency of running a neural network model on a neural network processor. Compared with a manner in which a data format is unified in a network convergence manner and the data format is converted offline in the conventional technology, the data format conversion apparatus in this embodiment of this application can reduce offline preprocessing time overheads, and a process of reading and writing tensor data may be preconfigured based on a data format supported by the processor and a data format of tensor data stored in the external memory. When the data format conversion apparatus works with a general-purpose software framework, internal format details are hidden, and a unified data format is presented to the outside, so that a developer does not need to understand a requirement of the processor for the data format. This facilitates popularization and use of the processor

According to the first aspect, in a first possible implementation, the data format conversion apparatus includes: a transpose buffer TPB, and the TPB includes a write port and a read port. The DMAC is configured to write the to-be-converted tensor data into the TPB through the write port in a first direction, when a product of a quantity of rows of data stored in the first direction of the TPB and a splitting width meets a read port bit width, read a first part of data of the to-be-converted tensor data from the TPB through the read port in a second direction at the splitting width, and splice and store the first part of data in an order of the first direction, to obtain the converted tensor data. The splitting width is a parameter for splitting data in one dimensional direction of the to-be-converted tensor data, and the first direction is perpendicular to the second direction.

In this embodiment of this application, the transpose buffer TPB is disposed in the DMA module, and ports for writing and reading in different directions are disposed in the TPB, so that a data format of tensor data can be converted in a data transfer process. This can reduce the data transmission overheads, the offline preprocessing time overheads of data format conversion, and the vector calculation time and hardware overheads in the conventional technology, and greatly improve the efficiency of running the neural network model on the neural network processor. According to the first possible implementation of the first aspect, in a second possible implementation, the TPB includes a first buffer and a second buffer, the first buffer includes a first write port and a first read port, and the second buffer includes a second write port and a second read port. The DMAC is configured to read the first part of data of the to-be-converted tensor data in the TPB from the second buffer through the second read port in the second direction at the splitting width when writing the to-be-converted tensor data into the first buffer through the first write port in the first direction, and splice the first part of data in the order of the first direction; or the DMAC is configured to read the first part of data of the to-be-converted tensor data in the TPB from the first buffer through the first read port in the second direction at the splitting width when writing the to-be-converted tensor data into the second buffer through the second write port in the first direction, and splice the first part of data in the order of the first direction.

Reading and writing can be implemented in parallel by using a buffer of a ping-pong structure, to improve efficiency of data format conversion and transmission.

According to the first or second possible implementation of the first aspect, in a third possible implementation, the data format conversion apparatus further includes: a reorder buffer ROB. The to-be-converted tensor data is to-be-read tensor data stored in the external memory of the data format conversion apparatus. The DMAC is configured to determine a cascading manner based on the to-be-converted tensor data, the splitting width, and the read port bit width. The cascading manner is a manner of combining two dimensions higher than a lowest dimension of the to-be-converted tensor data. The DMAC is configured to generate, based on the cascading manner and/or a bus bit width, a read request for reading the to-be-converted tensor data. The read request is used to read first tensor data, and the first tensor data is at least a part of data of the to-be-converted tensor data. The DMAC is configured to send a read command in a preset order based on the read request and the bus bit width. The read command carries a number specified in the preset order, and the preset order is an order from a lower dimension to a higher dimension based on the two dimensions. The read command is used to read second tensor data in the first tensor data, the second tensor data is at least a part of data of the first tensor data, and the number carried in the read command indicates an order of writing the second tensor data into the ROB.

According to the third possible implementation of the first aspect, in a fourth possible implementation, the DMAC is further configured to: read the second tensor data from the ROB in an order of the number, and write the second tensor data into the TPB through the write port in the first direction. The DMAC is further configured to: read, when the product of the quantity of rows of data stored in the first direction of the TPB and the splitting width meets the read port bit width, a second part of data of the second tensor data from the TPB through the read port in the second direction at the splitting width, splice the second part of data in the order of the first direction, and store the spliced second part of data into a matrix buffer of the DMA module.

The ROB is disposed in the DMA module, and it can also be ensured that data is read and written in sequence in a scenario of out-of-order reading of a bus.

According to the third possible implementation of the first aspect, in a fifth possible implementation, the read command further includes a logical address of the second tensor data and/or a size of the second tensor data. The size of the second tensor data is less than or equal to the bus bit width. The logical address included in the read command changes with a dimension other than the lowest dimension of the to-be-read tensor data based on an order of the number carried in the read command.

According to the fifth possible implementation of the first aspect, in a sixth possible implementation, when a remainder of a quantity of lowest dimensions of the to-be-read tensor data and a quantity of pieces of data corresponding to the splitting width is greater than 0, the DMAC is configured to perform supplementation processing on the lowest dimension based on the quantity of pieces of data corresponding to the splitting width and the remainder.

Data in any dimension can be split through supplementation processing, to implement conversion of tensor data in any dimension. This is applicable to a plurality of conversion scenarios. In addition, data can be continuously transferred after being supplemented, thereby improving data transfer efficiency and improving bus utilization.

According to the first or second possible implementation of the first aspect, in a seventh possible implementation, the data format conversion apparatus further includes: a reorder buffer ROB. The to-be-converted tensor data is to-be-output tensor data stored in a matrix buffer of the DMA module. The DMAC is configured to: sequentially read the to-be-output tensor data from the matrix buffer based on a bus bit width, and write the to-be-output tensor data into the TPB through the write port in the first direction. The DMAC is configured to: read, when the product of the quantity of rows of data stored in the first direction of the TPB and the splitting width meets the read port bit width, a third part of data of the to-be-output tensor data from the TPB through the read port in the second direction at the splitting width, splice the third part of data in the order of the first direction to obtain third tensor data, and store the third tensor data into the ROB in an order of reading the third tensor data through the read port. The DMAC is configured to generate a write command based on the third tensor data stored in the ROB. The write command carries a number that is specified based on an order of storing the third tensor data into the ROB, and the number carried in the write command indicates an order of writing the third tensor data into the external memory of the processor.

In the foregoing process, a data format of tensor data can be converted in a process of outputting the tensor data inside the processor, so that the data transmission overheads, the offline preprocessing time overheads of data format conversion, and the vector calculation time and hardware overheads in the conventional technology can be reduced, and the efficiency of running the neural network model on the neural network processor can be greatly improved.

According to the seventh possible implementation of the first aspect, in an eighth possible implementation, when a lowest dimension of the to-be-output tensor data is different from a preset lowest dimension, the DMAC is configured to delete a supplemented part of the third tensor data based on the lowest dimension of the to-be-output tensor data and the preset lowest dimension before storing the third tensor data into the ROB.

According to a second aspect, an embodiment of this application provides a processor. The processor includes the data format conversion apparatus according to the first aspect or one or more of the plurality of possible implementations of the first aspect.

According to a third aspect, an embodiment of this application provides a data format conversion method. The method is applied to a direct memory access DMA controller DMAC of a DMA module of a processor. A data format that is of tensor data and that is supported by the processor is a first data format. The method includes: if a second data format of tensor data stored in an external memory is different from the first data format, converting, in a process of transmitting to-be-converted tensor data between a memory of the processor and the external memory, the to-be-converted tensor data from the first data format into the second data format or from the second data format into the first data format, to obtain converted tensor data, where the first data format and the second data format respectively indicate a placement manner of the to-be-converted tensor data or the converted tensor data when the to-be-converted tensor data or the converted tensor data is stored.

According to the data format conversion method in this embodiment of this application, data format conversion is implemented in a process of transmitting data between the memory and the external memory. Compared with a manner in which original data is first read from the external memory to a buffer of a vector processing unit before an operation is performed, converted data is output to the external memory after the vector processing unit converts a data format of the original data, and data is read from the external memory again during the operation in the conventional technology, this embodiment of this application can reduce data transmission overheads and vector calculation time and hardware overheads, and improve efficiency of running a neural network model on a neural network processor. Compared with a manner in which a data format is unified in a network convergence manner and the data format is converted offline in the conventional technology, this embodiment of this application can reduce offline preprocessing time overheads, and a process of reading and writing tensor data may be preconfigured based on a data format supported by the processor and a data format of tensor data stored in the external memory. When the data format conversion method is used in combination with a general-purpose software framework, internal format details are hidden, and a unified data format is presented to the outside, so that a developer does not need to understand a requirement of the processor for the data format. This facilitates popularization and use of the processor.

According to the third aspect, in a first possible implementation, the DMA module further includes: a transpose buffer TPB, the TPB includes a write port and a read port, and the converting, in a process of transmitting to-be-converted tensor data between a memory of the processor and the external memory, the to-be-converted tensor data from the first data format into the second data format or from the second data format into the first data format, to obtain converted tensor data includes: writing the to-be-converted tensor data into the TPB through the write port in a first direction, when a product of a quantity of rows of data stored in the first direction of the TPB and a splitting width meets a read port bit width, reading a first part of data of the to-be-converted tensor data from the TPB through the read port in a second direction at the splitting width, and splicing and storing the first part of data in an order of the first direction, to obtain the converted tensor data, where the splitting width is a parameter for splitting data in one dimensional direction of the to-be-converted tensor data, and the first direction is perpendicular to the second direction.

In this embodiment of this application, the transpose buffer TPB is disposed in the DMA module, and ports for writing and reading in different directions are disposed in the TPB, so that a data format of tensor data can be converted in a data transfer process. This can reduce the data transmission overheads, the offline preprocessing time overheads of data format conversion, and the vector calculation time and hardware overheads in the conventional technology, and greatly improve the efficiency of running the neural network model on the neural network processor.

According to the first possible implementation of the third aspect, in a second possible implementation, the TPB includes a first buffer and a second buffer, the first buffer includes a first write port and a first read port, the second buffer includes a second write port and a second read port, and the writing the to-be-converted tensor data into the TPB through the write port in a first direction, and when a product of a quantity of rows of data stored in the first direction of the TPB and a splitting width meets a read port bit width, reading a first part of data of the to-be-converted tensor data from the TPB through the read port in a second direction at the splitting width includes: reading the first part of data of the to-be-converted tensor data in the TPB from the second buffer through the second read port in the second direction at the splitting width when writing the to-be-converted tensor data into the first buffer through the first write port in the first direction; or reading the first part of data of the to-be-converted tensor data in the TPB from the first buffer through the first read port in the second direction at the splitting width when writing the to-be-converted tensor data into the second buffer through the second write port in the first direction. Reading and writing can be implemented in parallel by using a buffer of a ping-pong structure, to improve efficiency of data format conversion and transmission.

According to the first or second possible implementation of the third aspect, in a third possible implementation, the DMA further includes: a reorder buffer ROB. When the to-be-converted tensor data is to-be-read tensor data stored in the external memory, the method further includes: determining a cascading manner based on the to-be-converted tensor data, the splitting width, and the read port bit width, where the cascading manner is a manner of combining two dimensions higher than a lowest dimension of the to-be-converted tensor data; generating, based on the cascading manner and/or a bus bit width, a read request for reading the to-be-converted tensor data, where the read request is used to read first tensor data, and the first tensor data is at least a part of data of the to-be-converted tensor data; and sending a read command in a preset order based on the read request and the bus bit width, where the read command carries a number specified in the preset order, and the preset order is an order from a lower dimension to a higher dimension based on the two dimensions; and the read command is used to read second tensor data in the first tensor data, the second tensor data is at least a part of data of the first tensor data, and the number carried in the read command indicates an order of writing the second tensor data into the ROB.

According to the third possible implementation of the third aspect, in a fourth possible implementation, the converting, in a process of transmitting to-be-converted tensor data between a memory of the processor and the external memory, the to-be-converted tensor data from the first data format into the second data format or from the second data format into the first data format, to obtain converted tensor data includes: reading the second tensor data from the ROB in an order of the number, and writing the second tensor data into the TPB through the write port in the first direction; and reading, when the product of the quantity of rows of data stored in the first direction of the TPB and the splitting width meets the read port bit width, a second part of data of the second tensor data from the TPB through the read port in the second direction at the splitting width, splicing the second part of data in the order of the first direction, and storing the spliced second part of data into a matrix buffer of the DMA module, to obtain the converted tensor data. The ROB is disposed in the DMA module, and it can also be ensured that data is read and written in sequence in a scenario of out-of-order reading of a bus.

According to the third possible implementation of the third aspect, in a fifth possible implementation, the read command further includes a logical address of the second tensor data and a size of the second tensor data, where the size of the second tensor data is less than or equal to the bus bit width; and the logical address included in the read command changes with a dimension other than the lowest dimension of the to-be-read tensor data based on an order of the number carried in the read command.

According to the fifth possible implementation of the third aspect, in a sixth possible implementation, the method further includes: when a remainder of a quantity of lowest dimensions of the to-be-read tensor data and a quantity of pieces of data corresponding to the splitting width is greater than 0, performing supplementation processing on the lowest dimension based on the quantity of pieces of data corresponding to the splitting width and the remainder.

Data in any dimension can be split through supplementation processing, to implement conversion of tensor data in any dimension. This is applicable to a plurality of conversion scenarios. In addition, data can be continuously transferred after being supplemented, thereby improving data transfer efficiency and improving bus utilization.

According to the first or second possible implementation of the third aspect, in a seventh possible implementation, the DMA module further includes: a reorder buffer ROB., and when the to-be-converted tensor data is to-be-output tensor data stored in a matrix buffer of the DMA module, the converting, in a process of transmitting to-be-converted tensor data between a memory of the processor and the external memory, the to-be-converted tensor data from the first data format into the second data format or from the second data format into the first data format includes: sequentially reading the to-be-output tensor data from the matrix buffer based on a bus bit width, and writing the to-be-output tensor data into the TPB through the write port in the first direction; reading, when the product of the quantity of rows of data stored in the first direction of the TPB and the splitting width meets the read port bit width, a third part of data of the to-be-output tensor data from the TPB through the read port in the second direction at the splitting width, splicing the third part of data in the order of the first direction to obtain third tensor data, and storing the third tensor data into the ROB in an order of reading the third tensor data from the read port; and generating a write command based on the third tensor data stored in the ROB, where the write command carries a number that is specified based on an order of storing the third tensor data into the ROB, and the number carried in the write command indicates an order of writing the third tensor data into the external memory of the processor

In the foregoing process, a data format of tensor data can be converted in a process of outputting the tensor data inside the processor, so that the data transmission overheads, the offline preprocessing time overheads of data format conversion, and the vector calculation time and hardware overheads in the conventional technology can be reduced, and the efficiency of running the neural network model on the neural network processor can be greatly improved.

According to the seventh possible implementation of the third aspect, in a seventh possible implementation, if a lowest dimension of the to-be-output tensor data is different from a preset lowest dimension, before the storing the third tensor data into the ROB, the method further includes: deleting a supplemented part of the third tensor data based on the lowest dimension of the to-be-output tensor data and the preset lowest dimension.

According to a fourth aspect, an embodiment of this application provides a data format conversion apparatus, including: a processor; and a memory, configured to store instructions executable by the processor. The processor is configured to implement the data format conversion method according to the third aspect or one or more of the plurality of possible implementations of the third aspect when executing the instructions.

According to a fourth aspect, an embodiment of this application provides a non-volatile computer-readable storage medium, storing computer program instructions. When the computer program instructions, when executed by a processor, implement the data format conversion method according to the third aspect or one or more of the plurality of possible implementations of the third aspect.

According to a fifth aspect, an embodiment of this application provides a computer program product, including computer-readable code or a non-volatile computer-readable storage medium carrying the computer-readable code. When the computer-readable code is run in an electronic device, a processor in the electronic device performs the data format conversion method according to the third aspect or one or more of the plurality of possible implementations of the third aspect.

According to a sixth aspect, an embodiment of this application provides a terminal device. The terminal device may include the processor according to the second aspect, may include the data format conversion apparatus according to the first aspect or one or more of the plurality of possible implementations of the first aspect, or may perform the data format conversion method according to the third aspect or one or more of the plurality of possible implementations of the third aspect.

These aspects and other aspects of this application are more concise and more comprehensive in descriptions of the following (a plurality of) embodiments.

### BRIEF DESCRIPTION OF DRAWINGS

The accompanying drawings included in this specification and constituting a part of this specification, together with this specification, illustrate example embodiments, features, and aspects of this application, and are used to explain the principles of this application.
FIG. 1 is a block diagram of a data format conversion apparatus according to an embodiment of this application;
FIG. 2 is a schematic diagram of a structure of a TPB according to an embodiment of this application;
FIG. 3 is a block diagram of a data format conversion apparatus according to an embodiment of this application;
FIG. 4a is a schematic diagram of to-be-converted tensor data according to an embodiment of this application;
FIG. 4b shows a manner of splitting a part of data corresponding to a read request according to an embodiment of this application;
FIG. 5a shows to-be-converted tensor data according to an embodiment of this application;
FIG. 5b is a schematic diagram of a manner of splitting a part of data corresponding to a read request according to an embodiment of this application;
FIG. 6 is a schematic diagram of an ROB according to an embodiment of this application;
FIG. 7 is a schematic diagram of a supplementation scenario according to an embodiment of this application;
FIG. 8 is a schematic diagram of a process of deleting a supplemented part according to an embodiment of this application;
FIG. 9 is a block diagram of a hardware architecture of an application scenario according to an embodiment of this application;
FIG. 10 is a flowchart of a process of running a neural network in an NPU according to an embodiment of this application;
FIG. 11 is a flowchart of data format conversion according to an embodiment of this application;
FIG. 12a is a schematic diagram of a format conversion process of tensor data according to an embodiment of this application;
FIG. 12b is a schematic diagram of tensor data according to an embodiment of this application.
FIG. 12c-1 and FIG. 12c-2 are a schematic diagram of tensor data according to an embodiment of this application; and

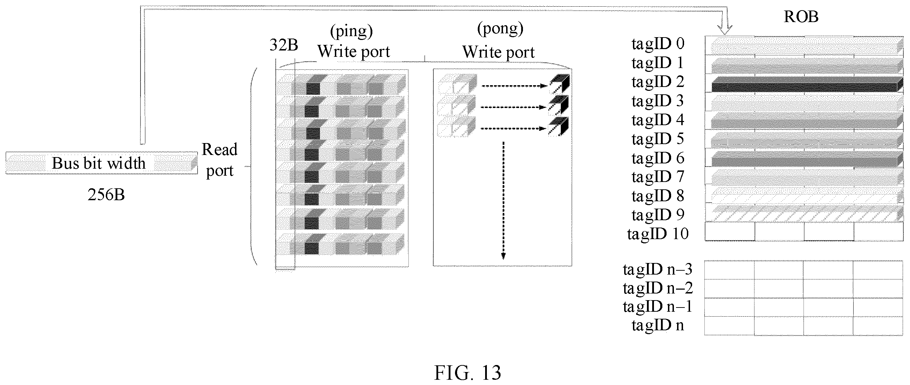

FIG. 13 is a schematic diagram of a format conversion process of tensor data according to an embodiment of this application.

### DESCRIPTION OF EMBODIMENTS

The following describes various example embodiments, features, and aspects of this application in detail with reference to the accompanying drawings. Identical reference signs in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, embodiment, or illustration". Any embodiment described as an "example" is not necessarily explained as being superior or better than other embodiments.

In addition, to better describe this application, numerous specific details are given in the following specific implementations. A person skilled in the art should understand that this application can also be implemented without some specific details. In some instances, methods, means, elements, and circuits that are well-known to a person skilled in the art are not described in detail, so that the subject matter of this application is highlighted.

### Terms explanation

### Tensor (tensor)

In embodiments of this application, the tensor is a feature description of a block of stored data, and the tensor records information such as a shape and a type of the data.

In embodiments of this application, the tensor may be understood as tensor data. An artificial intelligence deep learning framework TensorFlow is used as an example, and a rank (rank), a shape (shape), and a dimension number (dimension number) are usually used to describe a dimension of the tensor. A relationship among the rank, the shape, and the dimension number may be shown in Table 1.

**Table 1**

| Rank | Shape | Dimension number | Example |
|---|---|---|---|
| 0 | [] | 0 | 1 |
| 1 | [D1] | 1 | [2] |
| 2 | [D1, D2] | 2 | [2, 3] |
| 3 | [D1, D2, D3] | 3 | [2, 3, 4] |
| ... | [] | ... | [] |
| n | [D1, D2, D3, ..., Dn] | n | [1,2,3, ..., n] |

As shown in Table 1, a 0-rank tensor A=1, indicating a number

As shown in Table 1, a 2-rank tensor A=[2, 3], indicating a two-dimensional matrix. Specifically, the matrix is a matrix with two rows and three columns.

To resolve the foregoing technical problem, in the conventional technology, data format conversion is implemented by adding an operator (which is referred to as a conversion operator below) to a neural network. For example, conversion operators are inserted before and after a convolution operation or matrix multiplication operator. In an operation process, data format conversion is performed in a vector processing unit. If data format conversion needs to be performed on original data, a processor first reads the original data from an external memory into a buffer of the vector processing unit; and after converting a data format of the original data, the vector processing unit outputs converted data to the external memory. During the operation, the processor reads the converted data in the external memory into an internal memory for operation.

This increases access to the external memory and data transfer time. Because a large quantity of vector calculation operations are performed in a conversion process, overall operation time of the neural network is increased, and calculation efficiency is reduced. In addition, the added conversion operator also increases access to the vector processing unit, resulting in an increase in power consumption overheads of hardware.

In the conventional technology, data format conversion between layers in the neural network can be further reduced in a network convergence manner. When a convolutional neural network is run on an NPU, a graph fusion mode is used for the entire neural network, and all operators of the entire neural network support a same data format applicable to the hardware architecture. For example, the convolutional neural network includes a convolution layer, an activation layer, a pooling layer, and the like. Operators at each layer in the network use a data format suitable for the hardware architecture, and a layer that does not require matrix calculation also supports the data format. In this manner, original input data of the neural network is first converted offline into a data format suitable for calculation of the hardware architecture, and an operation is performed. Output data obtained through calculation is also converted offline and output. This manner is not friendly to developers who directly use the hardware architecture. Developers need to understand a requirement of the hardware architecture for the data format with high learning costs. This does not facilitate popularization of the hardware architecture. In addition, for the operator in the network, if the network is decomposed, in a single-operator mode, another version that is suitable for using a single operator needs to be developed. This increases software development difficulty, is not friendly to developers, and increases software development costs.

Consequently, in the conventional technology, in the data format conversion process, data transmission overheads are generated, and operation efficiency is reduced. The network convergence manner has a high requirement on a user. This does not facilitate popularization of the hardware architecture.

To resolve the foregoing technical problem, an embodiment of this application provides a data format conversion apparatus, so that a data format of tensor data can be converted in a data transmission process, and data transmission overheads, offline preprocessing time overheads of data format conversion, and vector calculation time and hardware overheads in the conventional technology can be reduced, and efficiency of running a neural network model on a neural network processor can be greatly improved.

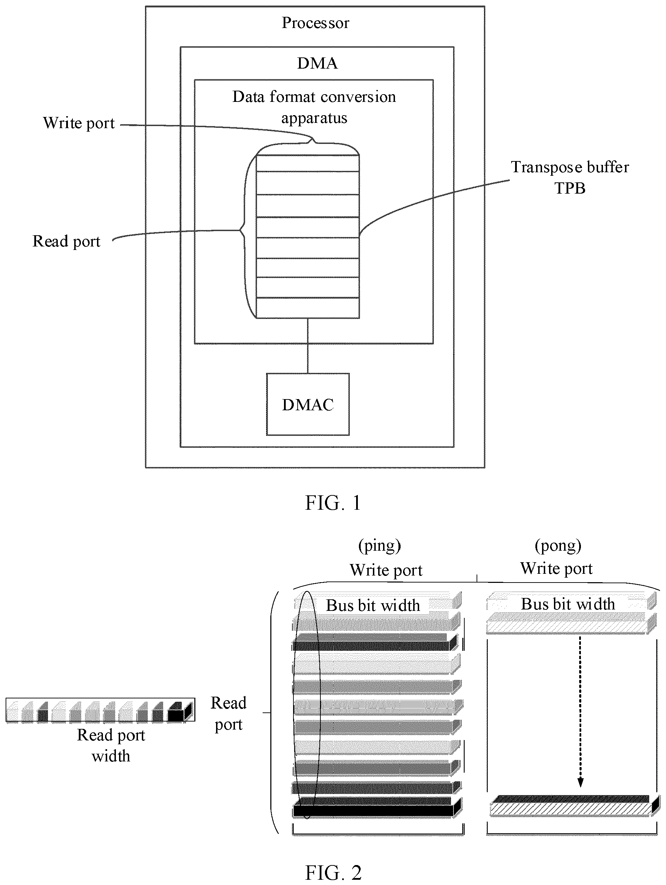

FIG. 1 is a block diagram of a data format conversion apparatus according to an embodiment of this application. As shown in FIG. 1, the data format conversion apparatus in this embodiment of this application may be located in a direct memory access (Direct Memory Access, DMA) module of a processor. The processor may be a field programmable gate array (field programmable gate array, FPGA), may be a dedicated integrated chip (application-specific integrated circuit, ASIC), may be a system chip (system on chip, SoC), may be a central processing unit (central processor unit, CPU), may be a network processor (network processor, NP) or a neural network processing unit (neural network processing unit, NPU), may be a digital signal processing circuit (digital signal processor, DSP), may be a microcontroller (micro controller unit, MCU), or may be a programmable controller (programmable logic device, PLD) or another integrated chip.

The DMA module may include a DMA controller (Direct Memory Access Controller, DMAC), and the DMAC is configured to control data transmission between a memory of the processor and an external memory. The external memory may be a read-only memory (read-only memory, ROM) or another type of static storage device that can store static information and instructions, or a random access memory (random access memory, RAM) or another type of dynamic storage device that can store information and instructions. The external memory may also include a non-volatile memory (non-volatile memory), for example, a flash memory (flash memory), a hard disk drive (hard disk drive, HDD), or a solid-state drive (solid-state drive, SSD). The external memory may further include a combination of the foregoing types of memories. Alternatively, the external memory may be an electrically erasable programmable read-only memory (electrically erasable programmable read-only memory, EEPROM), a compact disc read-only memory (compact disc read-only memory, CD-ROM) or another compact disc storage medium, an optical disc storage medium (including a compact disc, a laser disc, an optical disc, a digital versatile disc, a Blu-ray disc, or the like), a magnetic disk storage medium, another magnetic storage device, or any other medium that can be configured to carry or store expected program code in a form of an instruction or a data structure and that is accessible by a computer, but is not limited thereto.

In a possible implementation, a data format that is of tensor data and that is supported by the processor is a first data format, and a data format of tensor data stored in the external memory is a second data format. The first data format and the second data format each may indicate a placement manner of the tensor data when the tensor data is stored in a memory. For example, the first data format may be NHWC, and the second data format may be NCHW; or the first data format may be NCHW, and the second data format may be NHWC. Specific formats of the first data format and the second data format are not limited in this application.

In this embodiment of this application, if the second data format of the tensor data stored in the external memory is different from the first data format, the DMAC is configured to convert, in a process of transmitting to-be-converted tensor data between the memory of the processor and the external memory, the to-be-converted tensor data from the first data format into the second data format or from the second data format into the first data format, to obtain converted tensor data. That is, the first data format and the second data format may respectively indicate a placement manner of the to-be-converted tensor data or the converted tensor data when the to-be-converted tensor data or the converted tensor data is stored.

For example, if the to-be-converted tensor data is tensor data stored in the memory of the processor, the placement manner of the to-be-converted tensor data in the memory is the first data format. If the to-be-converted tensor data is an operation result obtained through an operation by the processor, the processor needs to output the to-be-converted tensor data to the external memory, and the DMAC may convert, in a process of outputting the to-be-converted tensor data in the memory to the external memory, the to-be-converted tensor data from the first data format into the second data format, to obtain the converted tensor data, that is, the converted tensor data is stored in the external memory in the second data format.

If the to-be-converted tensor data is stored in the external memory, the placement manner of the to-be-converted tensor data when the to-be-converted tensor data is stored in the external memory is the second data format. If the processor needs to perform an operation on the to-be-converted tensor data, the DMAC may convert, in a process of reading the to-be-converted tensor data in the external memory into the memory, the to-be-converted tensor data from the second data format into the first data format, to obtain the converted tensor data, that is, the converted tensor data is stored in the memory of the processor in the first data format.

In this embodiment of this application, a specific process in which the DMAC converts, in the process of transmitting the to-be-converted tensor data between the memory of the processor and the external memory, the to-be-converted tensor data from the first data format into the second data format or from the second data format into the first data format may be implemented by using a software program. In a process of running the program to read data, the DMAC may calculate an offset address of the read data based on the data formats (the first data format and the second data format) before and after the conversion, and read and store the data based on the calculated offset address. For example, it is assumed that to-be-converted tensor data is [X, Y], which is shown in Table 2.

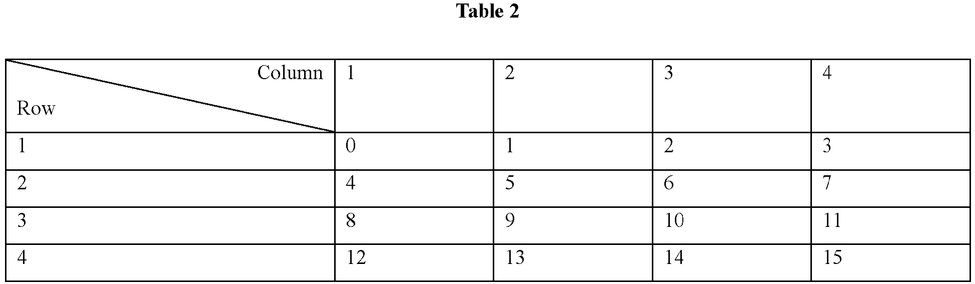

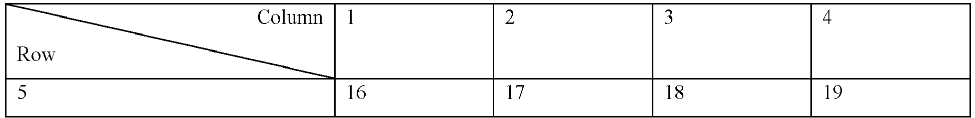

A storage order of the to-be-converted tensor data is 0, 1, 2, 3, 4..., 16, 17, 18, and 19. To convert the to-be-converted tensor data from a format of [X, Y] into a format of [Y, X], when reading the to-be-converted tensor data, the DMAC may calculate the offset address based on the format of the to-be-converted tensor data. For example, the to-be-converted tensor data is a matrix with five rows and four columns, a base address for storing the to-be-converted tensor data is B, and a size of each piece of data in the to-be-converted tensor data is represented as size. The DMAC may calculate an offset address of data read each time, which is 0, 4*size, 8*size, 12*size, 16*size, 1*size, 2*size, ..., 3*size, 7*size, ..., and 19*size. The DMAC may sequentially read 0, 4, 8, 12, 16, ..., 3, 7, 11, 15, and 19 based on the calculated offset addresses and store 0, 4, 8, 12, 16, ..., 3, 7, 11, 15, and 19 based on a read order, to obtain a matrix [Y, X] with four rows and five columns, which is shown in Table 3.

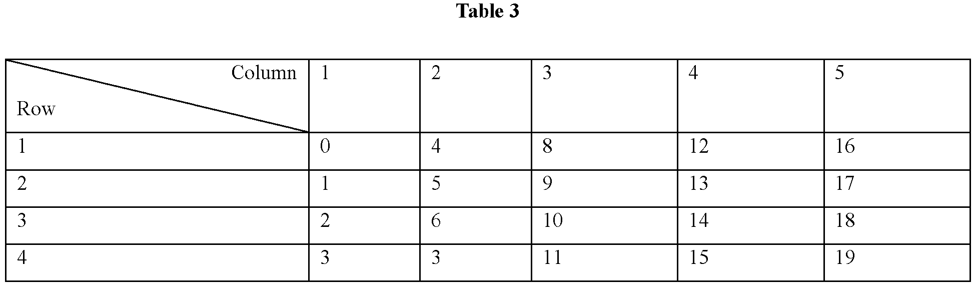

It should be noted that the foregoing descriptions are merely an example of implementing the data format conversion process in this application, and this application is not limited in any manner. A manner of reading data by the DMAC may be determined based on the first data format supported by the processor and the second data format stored in the external memory. A specific reading process is not limited in this application.

In this embodiment of this application, a conversion process may also be implemented by using hardware. In a possible implementation, the data format conversion apparatus includes: a transpose buffer (Transpose Buffer, TPB), and the TPB includes a write port and a read port. The TPB may be a static random access memory (Static Random Access Memory, SRAM). The TPB may be provided with two groups of data and address buses, one group of data and address bus serves as the write port, and the other group of data and address bus serves as the read port. FIG. 1 is a schematic diagram of a structure of a transpose buffer according to an embodiment of this application. As shown in FIG. 1, the TPB may include a plurality of rows of buffers, each row of buffer may further include a plurality of buffer units, and a bit width of each row of buffer is related to a quantity of the plurality of buffer units included in each row of buffer and a size of each buffer unit.

In this embodiment of this application, the bit width of each row of buffer may be the same. For example, each buffer unit has a same size, and each row of buffer includes a same quantity of buffer units. Because the TPB is of a configured hardware structure, a quantity of rows of the plurality of rows of buffers of the TPB is fixed, and is preset based on an actual requirement of an application scenario.

In this embodiment of this application, the DMAC is configured to: write the to-be-converted tensor data into the TPB through the write port in a first direction, when a product of a quantity of rows of data stored in the first direction of the TPB and a splitting width meets a read port bit width, read a first part of data of the to-be-converted tensor data from the TPB through the read port in a second direction at the splitting width, and splice and store the first part of data in an order of the first direction, to obtain the converted tensor data.

The read port bit width may be a size of data that can be read through the read port of the TPB at a time. The splitting width is a parameter for splitting data in one dimensional direction of the to-be-converted tensor data, for example, a size of data split in a lowest dimension of the to-be-converted tensor data. For example, it is assumed that a data format of the to-be-converted tensor data is [X, Y, Z], and data of the converted tensor data is [Z", X, Y, Z'], where Z' is a quantity of pieces of data corresponding to the splitting width, and Z'×Z"=Z. The splitting width may be determined based on a requirement of an actual application scenario. This is not limited in this application.

In a possible implementation, the first direction is perpendicular to the second direction. As shown in FIG. 1, the first direction may be a vertical direction, and the second direction may be a horizontal direction. Alternatively, in another possible implementation, the first direction may be a horizontal direction, and the second direction may be a vertical direction. This is not limited in this application.

The to-be-converted tensor data may be tensor data stored in the external memory. The processor reads the tensor data stored in the external memory into the memory for calculation, and performs data format conversion in the reading process. Alternatively, the to-be-converted tensor data may be tensor data stored in the memory of the processor. A result obtained through calculation may be output to the external memory, and data format conversion may be performed in the output process.

Regardless of whether the data format conversion is performed in the reading process or the output process, the DMAC may write the to-be-converted tensor data into the TPB through the write port in the first direction, when the product of the quantity of rows of data stored in the first direction of the TPB and the splitting width meets the read port bit width, read the to-be-converted tensor data from the TPB through the read port in the second direction at the splitting width, and perform the data format conversion in a splicing process.

That the product of the quantity of rows of data stored in the first direction of the TPB and the splitting width meets the read port bit width may mean that a product of a size of the splitting width and the quantity of rows is equal to a size of data read at a time based on the read port bit width. For example, if the splitting width is 32B, and the read port bit width is 256B, when eight (256/32) rows of to-be-converted tensor data are fully stored in the first direction of the TPB, the product 8*32B of the quantity of rows of data stored in the first direction and the splitting width is equal to the read port bit width 256B. That is, 32B is read based on one row of to-be-converted tensor data, the read port bit width is 256B, the eight rows of to-be-converted tensor data (the first part of data) may be read through the read port of the TPB in the first direction at a time, and the read first part of data is spliced and stored.

For example, it is assumed that the to-be-converted tensor data is [X, Y], which is shown in Table 2, and it is assumed that the DMAC obtains one row of the to-be-converted tensor data each time, and writes the row of data into one row of buffer of the TPB through the write port. After all to-be-converted data is written into the TPB, a manner of storing the to-be-converted tensor data in the TPB may be shown in Table 2. In this case, the DMAC may read data through the read port in a horizontal direction at the splitting width, and splice the read data in a row order. It is assumed that a quantity of pieces of split data corresponding to the splitting width is 1. For example, data read for the first time is 0, 4, 8, 12, and 16 and is spliced into a row of data (0, 4, 8, 12, 16). Data read each time through the read port of the TPB is spliced into a row of data, and each row of data obtained through splicing may be spliced into new tensor data, to obtain converted tensor data (Y, X, 1), which is shown in Table 3.

It should be noted that the structure form of the TPB, the data format of the tensor data, the first direction, and the second direction shown in FIG. 1 are merely some examples of this application. This application is not limited thereto. For example, the first direction may be a horizontal direction, and the second direction is a vertical direction. The structure form of the TPB may be set based on a data format supported by the processor. The formats of the tensor data in Table 1 and Table 2 are merely examples of this application. This application is not limited thereto. The splitting width is merely an example, and this application is not limited thereto.

It can be learned from the foregoing content that, regardless of whether software or hardware is used for implementation, a specific conversion process of the data format conversion apparatus in this embodiment of this application is preset based on the first data format and the second data format, and a unified data format is presented to the outside. The processor performs data format conversion based on a specific data dimension, and a developer does not need to understand a requirement of the processor for the data format.

According to this embodiment of this application, the data format conversion apparatus and the DMAC are disposed in the DMA module of the processor. If the first data format supported by the processor is different from the second data format of the tensor data stored in the external memory, the DMAC may convert the to-be-converted tensor data between the first data format conversion and the second data format in the process of transmitting the to-be-converted tensor data between the memory of the processor and the external memory, to obtain the converted tensor data. Because the data format conversion is implemented in the process of transmitting the data between the memory and the external memory, compared with a manner in which original data is first read from the external memory to a buffer of a vector processing unit before an operation is performed, converted data is output to the external memory after the vector processing unit converts a data format of the original data, and the data is read from the external memory again during the operation in the conventional technology, the data format conversion apparatus in this embodiment of this application can reduce data transmission overheads and vector calculation time and hardware overheads, and improve efficiency of running a neural network model on a neural network processor.

Compared with a manner in which a data format is unified in a network convergence manner and the data format is converted offline in the conventional technology, the data format conversion apparatus in this embodiment of this application can reduce offline preprocessing time overheads, and a process of reading and writing tensor data may be preconfigured based on a data format supported by the processor and a data format of tensor data stored in the external memory. When the data format conversion apparatus works with a general-purpose software framework, internal format details are hidden, and a unified data format is presented to the outside, so that a developer does not need to understand a requirement of the processor for the data format. This facilitates popularization and use of the processor.

In a possible implementation, the TPB in this embodiment of this application may use a buffer of a ping-pong structure, to implement parallel data format conversion, thereby improving data format conversion and transmission efficiency.

In a possible implementation, the TPB in this embodiment of this application may include a first buffer and a second buffer, the first buffer includes a first write port and a first read port, and the second buffer includes a second write port and a second read port. One of the first buffer and the second buffer is a ping path buffer, and the other is a pong path buffer. In this case, when a data volume is large, a writing process and a reading process may be performed in parallel.

FIG. 2 is a schematic diagram of a structure of a TPB according to an embodiment of this application. As shown in FIG. 2, "burst" in the figure represents a bus bit width, and the bus bit width may be a system bus bit width, that is, a quantity of bits of binary data that can be simultaneously transmitted through a system bus of the processor or a width of data written/read through the bus each time. In this embodiment of this application, the TPB includes the write port and the read port. A width of data written through the write port at a time is a write port bit width, and a width of data read through the read port at a time is a read port bit width. The write port bit width or the read port bit width of the TPB may be the same as or different from the bus bit width. For example, the read port bit width/the write port bit width of the TPB may be greater than the bus bit width. This is not limited in this application. In this embodiment of this application, the data format conversion apparatus and method in this application are described by using an example in which the read port bit width/the write port bit width of the TPB is the same as the bus bit width. In FIG. 2, a buffer on the left side represents a ping path buffer, and a buffer on the right side represents a pong path buffer. In an example in FIG. 2, a read port of the ping path buffer already meets the read port bit width, and data in the ping path buffer may start to be read. In a process of reading the ping path buffer, data may continue to be written into the pong path buffer. Similarly, when a read port of the pong path buffer already meets the read port bit width, after the data in the ping path buffer is read, data in the pong path buffer may start to be read, and the data continues to be simultaneously written into the ping path buffer

Therefore, in this embodiment of this application, the DMAC is configured to: read the first part of data of the to-be-converted tensor data in the TPB from the second buffer through the second read port in the second direction at the splitting width when writing the to-be-converted tensor data into the first buffer through the first write port in the first direction, and splice the first part of data in the order of the first direction; or the DMAC is configured to: read the to-be-converted tensor data from the first buffer through the first read port in the second direction when writing the first part of data of the to-be-converted tensor data in the TPB into the second buffer through the second write port in the first direction at the splitting width, and splice the first part of data in the order of the first direction.

Reading and writing can be implemented in parallel by using the buffer of the ping-pong structure, to improve the data format conversion and transmission efficiency.

In a possible implementation, the data format conversion apparatus further includes: a reorder buffer (ReOrder Buffer, ROB). The reorder buffer is configured to interact with an external bus to ensure sequential reading and writing of data.

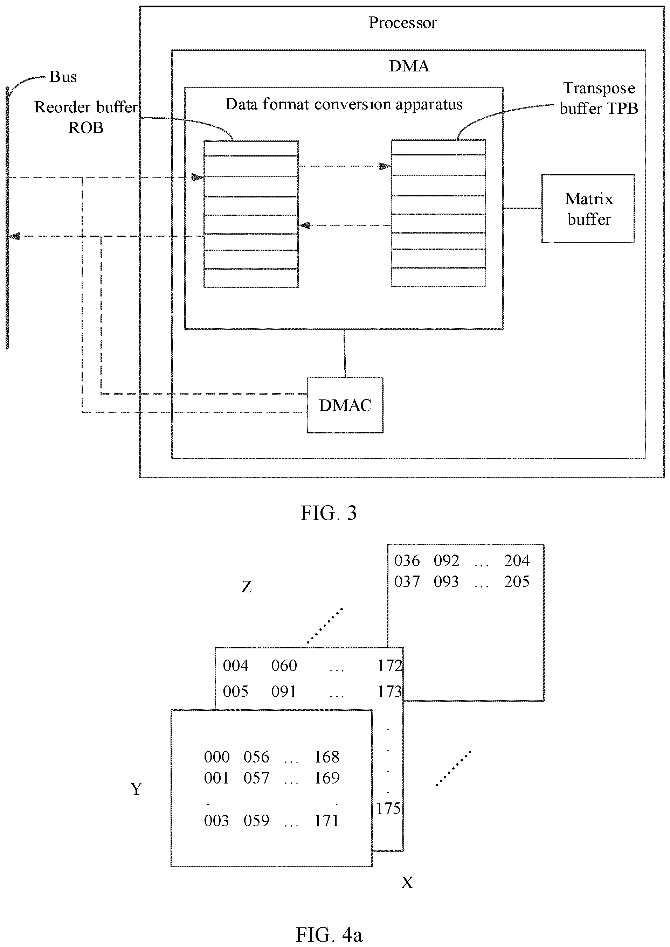

FIG. 3 is a block diagram of a data format conversion apparatus according to an embodiment of this application. As shown in FIG. 3, the ROB is located between the bus and the TPB. When data is read and written, sequential reading and sequential writing are ensured under control of the DMAC.

In a possible implementation, the DMAC is configured to determine a cascading manner based on the to-be-converted tensor data, the splitting width, and the read port bit width. The cascading manner is a manner of combining two dimensions higher than a lowest dimension of the to-be-converted tensor data.

Specifically, it is assumed that the to-be-converted tensor data is (X, Y, Z). FIG. 4a is a schematic diagram of to-be-converted tensor data according to an embodiment of this application. The to-be-converted tensor data is 4×4×10. The read port bit width is W1, the splitting width is W2, and W1/W2=8. That is, when the TPB fully stores eight rows, the read port bit width is met. The cascading manner is to cascade two dimensions higher than the lowest dimension in a direction from a lower dimension to a higher dimension, and use a quantity of dimensions that meet the read port bit width as a group. For example, every eight dimensions in a direction from Y to X in X and Y dimensions are used as a group. As shown in FIG. 4a, eight dimensions on the left side of a dotted line are used as a group, and in the X and Y dimensions, every eight dimensions are used as a group. In other words, two dimensional directions higher than the lowest dimension may be divided into a plurality of cascaded blocks in the cascading manner. For example, in an example shown in FIG. 4a, the first two dimensions in an X-dimensional direction and four dimensions in a Y-dimensional direction form a cascaded block, and the last two dimensions in the Y-dimensional direction and four dimensions in the Y-dimensional direction form a cascaded block.

The DMAC is configured to generate a read request based on the cascading manner, the bus bit width, and the to-be-converted tensor data. The read request is used to read the to-be-converted tensor data from the external memory.

When reading data, the DMAC may generate a plurality of read requests. Each read request is used to read a part of data (first tensor data) of the to-be-converted tensor data. A size of the part of data in a lowest dimensional direction is less than or equal to the bus bit width, and cascading manners of the part of data are the same in two dimensional directions higher than the lowest dimensional direction. It is assumed that a quantity of pieces of data in the lowest dimension that is read at a time based on the bus bit width burst is Z_{burst}. If a quantity of lowest dimensions of the to-be-converted tensor data is an integer multiple of Z_{burst}, a size of a part of data corresponding to each read request in the lowest dimensional direction is equal to the bus bit width. If a remainder of a quantity of pieces of data of the to-be-converted tensor data in the lowest dimension and Z_{burst} is greater than 0, a size of at least a part of data in the lowest dimensional direction is less than the bus bit width.

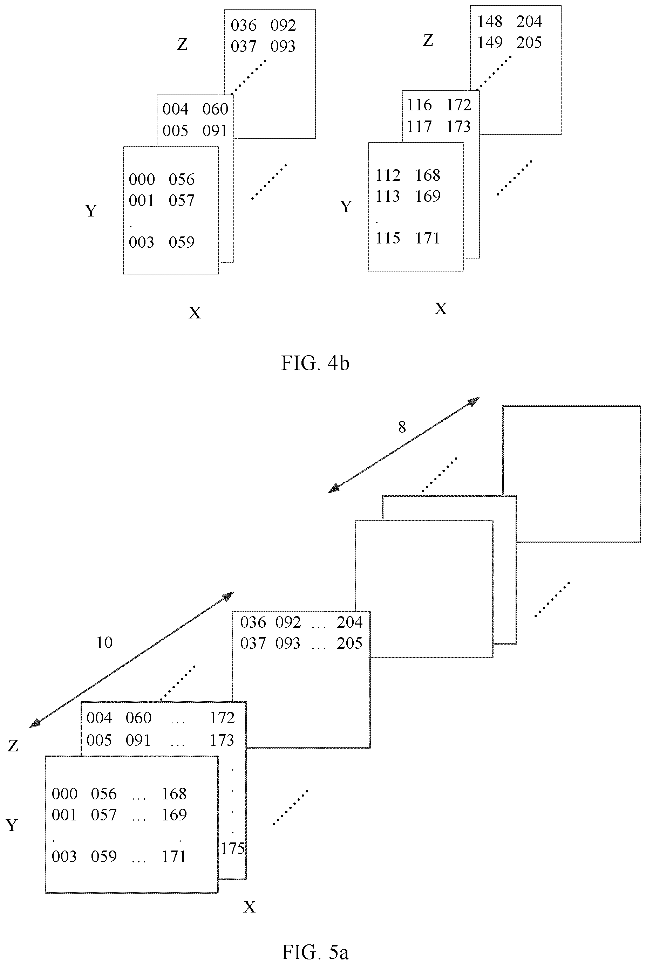

It can be learned from the foregoing that the DMAC is configured to generate, based on the cascading manner and/or the bus bit width, the read request for reading the to-be-converted tensor data. FIG. 4b shows a manner of splitting a part of data corresponding to a read request according to an embodiment of this application. As shown in FIG. 4b, it is assumed that Z_{burst} is 10, and the cascading manner is shown in FIG. 4a. In this case, the DMAC generates, based on the cascading manner, two read requests for reading the to-be-converted tensor data shown in FIG. 4a. One of the read requests corresponds to the part of data shown in FIG. 4b.

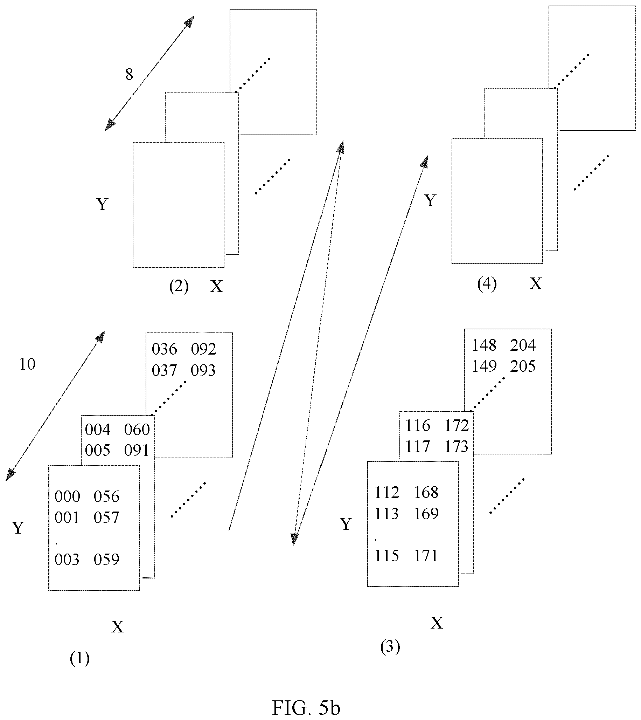

FIG. 5a is to-be-converted tensor data according to an embodiment of this application. FIG. 5b is a schematic diagram of a manner of splitting a part of data corresponding to a read request according to an embodiment of this application. It is assumed that Z_{burst} is 10, the to-be-converted tensor data is 4×4×18, and the cascading manner is the same as that in FIG. 4b. In FIG. 5b, a first part (1) of data and a second part (2) of data are data of one cascaded block, and a third part (3) of data and a fourth part (4) of data are data of one cascaded block. In this case, each part of data corresponding to the read request generated by the DMAC based on the to-be-converted tensor data, the bus bit width, and the cascading manner is shown in FIG. 5b. Numbers (1), (2), (3), and (4) below each part of data indicate an order of reading data, that is, in a cascading order, data of a first cascaded block is read, and data of a next cascaded block is read. The data is read in an order shown by middle arrows in FIG. 5b. In this example, because a size in the lowest dimensional direction is greater than the bus bit width, data of one cascaded block may be read in two times. Because the remainder of the quantity of dimensions in the lowest dimensional direction and Z_{burst} is greater than 0, a size of a part of data in the lowest dimensional direction is less than the bus bit width, which is shown in (2) and (4) in FIG. 5b. It should be noted that FIG. 5b shows a cascading manner of data and a manner of reading data of each cascaded block when the data is read, but not a manner of splitting the data during format conversion.

In this embodiment of this application, the DMAC is further configured to send a plurality of read commands in a preset order based on the read request and the bus bit width. A size of a part of data corresponding to one read request is greater than the bus bit width. Therefore, the plurality of read commands may be generated based on one read request. Each read command is used to read a part of tensor data (second tensor data) in the first tensor data, and a size of the second tensor data is less than or equal to the bus bit width. The preset order may be a cascading order from a low dimension to a high dimension in a cascaded block corresponding to the read request.

The DMAC is configured to send a read command based on a cascading order in a cascaded block. The cascading order is from a low dimension to a high dimension. Each read command may carry a corresponding number, and the number carried in the read command indicates an order of writing the to-be-converted tensor data into the ROB. In this embodiment of this application, a plurality of read commands corresponding to one read request may be numbered in the cascading order, and a target number (Target Identity, tagID) is used to mark an order of a sent read command. For example, as shown in FIG. 5b, for the first part (1) of data in FIG. 5b, the DMAC may send eight read commands in an order from a dimension Y to a dimension X. Each read command may be used to read data in a Z-dimensional direction, and tagIDs carried in the eight read commands are from tagID 0 to tagID 7.

In a possible implementation, the read command further includes a logical address of the second tensor data and/or a size of the second tensor data. The size of the second tensor data may be the bus bit width or may be less than the bus bit width. The logical address included in the read command changes with a dimension other than the lowest dimension of the to-be-read tensor data based on an order of the number carried in the read command.

For example, in the example shown in FIG. 4b, it is assumed that the bus bit width is B (burst), data in a Z direction is first read, and it is assumed that a quantity of pieces of data in the Z direction that is read at a time based on the bus bit width B is Z0. In an example, it is assumed that ZO is 10. In this case, for the first tensor data in FIG. 4b, a quantity of read commands sent by the DMAC is 8, an offset address carried in a read command 1 is 0, an offset address carried in a read command 2 is Z*size, where size indicates a size of each piece of data in the tensor data in the example in FIG. 4b, an offset address carried in a read command 3 is 2*Z*size, an offset address carried in a read command 4 is 3*Z*size, and the like. In this way, data that may be read based on the offset address carried in the read command 1 and the bus bit width is (000, 004, 008, ..., 036), data that may be read based on the read command 2 is (001, 005, 009, ..., 037), data that may be read based on the read command 3 is (002, 006, 0010, ..., 038), ..., data that may be read based on the read command 5 is (056, 060, 064, ..., 092), and the like.

In another example, it is assumed that a lowest dimension of to-be-read tensor data is greater than the bus bit width, and data in the lowest dimension (Z) cannot be completely read at a time based on the bus bit width. When controlling the bus to read the data, the DMA may perform splitting in the lowest dimension Z.

For example, as shown in FIG. 5b, the to-be-converted tensor data is 4×4×18. 10 pieces of data in the lowest dimension are read at a time based on the bus bit width, a quantity of lowest dimensions is 18, and a remainder of 18/10 is 8. Therefore, the DMAC may split the to-be-converted tensor data during reading.

For any part of the first tensor data in FIG. 5b, the DMAC may send eight read commands in the manner shown in FIG. 4b, and tagIDs carried in the eight read commands are from tagID 0 to tagID 7.

It should be noted that FIG. 4a, FIG. 4b, FIG. 5a, and FIG. 5b are merely examples for describing a tensor data splitting manner, and do not represent an actual data storage form. A storage manner of the to-be-converted tensor data stored in the external memory does not change, and splitting occurs in a reading process.

Because the bus reads data out of order, data corresponding to a read command sent later may be received first. Therefore, in this embodiment of this application, the DMAC is further configured to: receive the second tensor data corresponding to the read command, and write the second tensor data into the ROB based on a number carried in the second tensor data. The second tensor data is a part of data of the to-be-read tensor data, and the second tensor data carries the number of the corresponding read command.

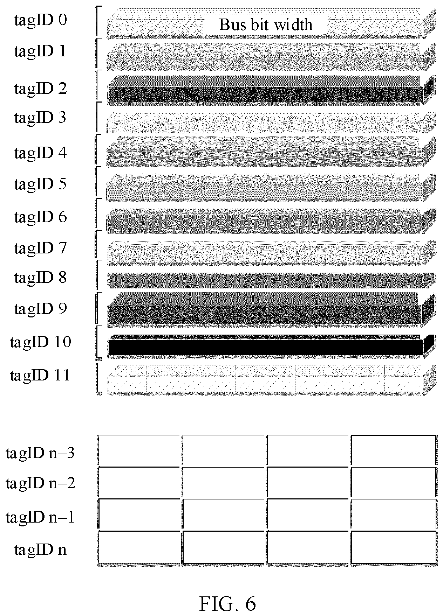

FIG. 6 is a schematic diagram of an ROB according to an embodiment of this application. As shown in FIG. 6, it is assumed that the DMA module first receives second tensor data corresponding to a read command carrying a number tagID 2, and the DMAC may write the second tensor data into one row of buffer corresponding to the tagID 2 in the ROB shown in FIG. 6.

It should be noted that FIG. 6 is merely a schematic diagram of a data storage manner in the ROB. In an actual process of writing the second tensor data into the ROB, the DMAC may calculate an offset address of the second tensor data based on a size of the second tensor data and the tagID, and write the second tensor data into the ROB based on a base address of the ROB and the offset address of the second tensor data.

In an implementation of this application, for a scenario in which the to-be-converted tensor data is read from the external memory, the DMAC is further configured to: read the second tensor data from the ROB in an order of the number, and write the second tensor data into the TPB through the write port in the first direction. The DMAC is further configured to: read, when the product of the quantity of rows of data stored in the first direction of the TPB and the splitting width meets the read port bit width, a second part of data of the second tensor data from the TPB through the read port in the second direction at the splitting width, splice the second part of data in the order of the first direction, and store the spliced second part of data into a matrix buffer of the DMA module. Tensor data in same X and Y dimensions is placed in a row of buffer of the TPB.

As shown in FIG. 3, the DMA module may further include a matrix buffer. The matrix buffer may be a random access memory (Random Access Memory, RAM). The TPB shown in FIG. 3 may be the buffer of the ping-pong structure shown in FIG. 2.

Therefore, as shown in FIG. 2, the DMAC may be configured to: read the second tensor data from the ROB in the order of the number, and write the second tensor data into the ping path buffer through the first write port in the vertical direction. If the ping path buffer already meets the read port bit width, data in the ping path buffer may start to be read through the first read port at the splitting width, and the second tensor data read from the ROB may continue to be simultaneously written into the pong path buffer through the second write port in the vertical direction. If the pong path buffer already meets the read port bit width, after the data in the ping path buffer is read, data in the pong path buffer may start to be read at the splitting width, and the data continues to be simultaneously written into the ping path buffer.

When the second tensor data is read from the TPB through the first read port/the second read port, the second part of data may be spliced in an order of the vertical direction to obtain a row of tensor data. As shown in FIG. 2, the leftmost side is tensor data obtained by splicing each row of data (the second part of data) read through the read port, and the row of tensor data may be written into the matrix buffer. By performing the foregoing process, format conversion of the externally input tensor data may be completed.

In a possible implementation, when a remainder of a quantity of lowest dimensions of the to-be-read tensor data and a quantity Z' of pieces of data corresponding to the splitting width is greater than 0, the DMAC is configured to perform supplementation processing on the lowest dimension based on the quantity of pieces of data corresponding to the splitting width and the remainder.

Data in any dimension can be split through supplementation processing, to implement conversion of tensor data in any dimension. This is applicable to a plurality of conversion scenarios. In addition, data can be continuously transferred after being supplemented, thereby improving data transfer efficiency and improving bus utilization.

To reduce data movement, the DMAC may perform a supplementation operation during data format conversion.

For the foregoing supplementation processing, the DMAC may be configured to perform supplementation processing on the lowest dimension when the second tensor data in the ROB is written into the TPB, or perform supplementation processing when reading the second tensor data in the TPB from the read port for splicing. This is not limited in this application.

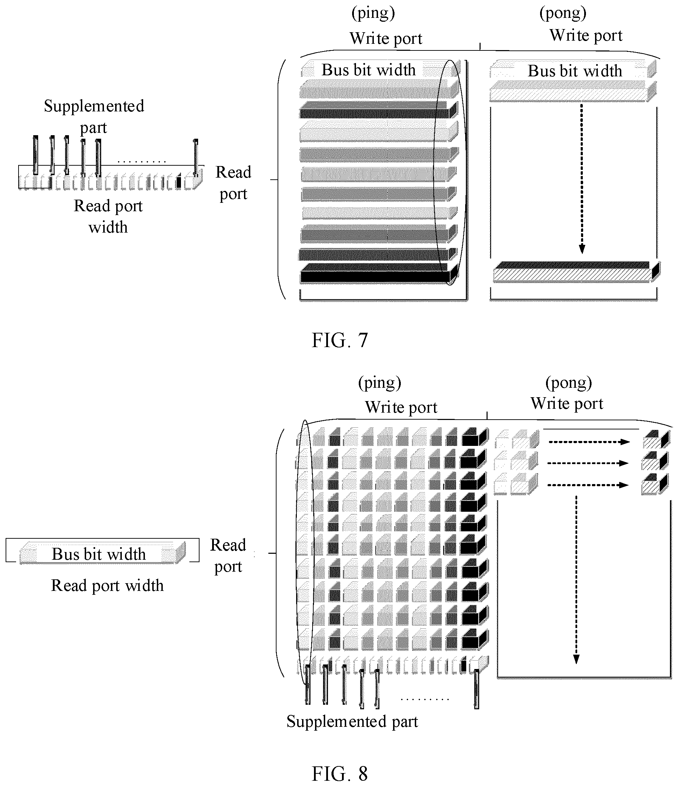

FIG. 7 is a schematic diagram of a supplementation scenario according to an embodiment of this application. For example, a dimension of the to-be-converted tensor data is 4×4×18. A quantity of pieces of data in the lowest dimension that is read at a time at the splitting width is 5, a quantity of lowest dimensions is 18, and a remainder of 18/5 is 3. Therefore, for the second part (2) of data and the fourth part (4) of data shown in FIG. 5b, the DMAC may supplement the lowest dimension with 0 to 5. As shown in FIG. 7, when data on a rightmost side is read from the read port of the ping path buffer of the TPB, and supplementation processing is performed when the data is spliced in the vertical direction. A specific manner of the supplementation processing is: After each read first part of data is supplemented, the data is spliced in the vertical direction (the first direction). FIG. 7 shows data of a supplemented part.

In a possible implementation, when the to-be-converted tensor data is to-be-output tensor data stored in a matrix buffer of the DMA module, the DMAC is configured to: sequentially read the to-be-output tensor data from the matrix buffer based on the bus bit width, and write the to-be-output tensor data into the TPB through the write port in the first direction in a reading order. The DMAC is configured to read, when the product of the quantity of rows of data stored in the first direction of the TPB and the splitting width meets the read port bit width, a third part of data of the to-be-output tensor data from the TPB through the read port in the second direction at the splitting width, splice the third part of data in the order of the first direction to obtain third tensor data, and store the third tensor data into the ROB in an order of reading the third tensor data from the read port.

In this embodiment, when the third tensor data in the ROB is output to the external memory, a manner the same as that of reading data from the external memory may be used. The DMAC is configured to generate a write command based on the third tensor data stored in the ROB. The write command carries a number that is specified based on an order of storing the third tensor data into the ROB, and the number carried in the write command indicates an order of writing the third tensor data into the external memory of the processor. The tagID may be used to mark an order of the sent write command. For a specific manner, refer to the data reading process. Details are not described again.

In a possible implementation, when a lowest dimension of the to-be-output tensor data is different from a preset lowest dimension, the DMAC is configured to delete a supplemented part of the third tensor data based on the lowest dimension of the to-be-output tensor data and the preset lowest dimension before storing the third tensor data into the ROB. During this period, the preset lowest dimension may be a lowest dimension of to-be-output tensor data that is determined in advance based on data before calculation. If the lowest dimension of the to-be-output tensor data is different from the preset lowest dimension, it indicates that before the to-be-output tensor data is obtained through calculation, supplementation processing is performed on input tensor data. Therefore, for the to-be-output tensor data, the supplemented part may be deleted.

FIG. 8 is a schematic diagram of a process of deleting a supplemented part according to an embodiment of this application. When there is a case that data in the lowest dimensional direction is supplemented with data inside the NPU, the data format conversion apparatus deletes a supplemented part during output. As shown in FIG. 8, for the third tensor data, there is a case that the lowest dimension is supplemented finally, and when the TPB stores data, the data is supplemented and arranged based on a size of the bus bit width. However, when data is read, vertically spliced data meets the read port bit width, and the DMAC may delete data corresponding to the supplemented part and write the data into the ROB.

### Application example

In this application, an application scenario of the data format conversion apparatus is a process in which an NPU loads externally stored tensor data to the NPU in a process of running a neural network, performs an operation on the tensor data to obtain an operation result, and outputs the operation result. The operation result may alternatively be tensor data.

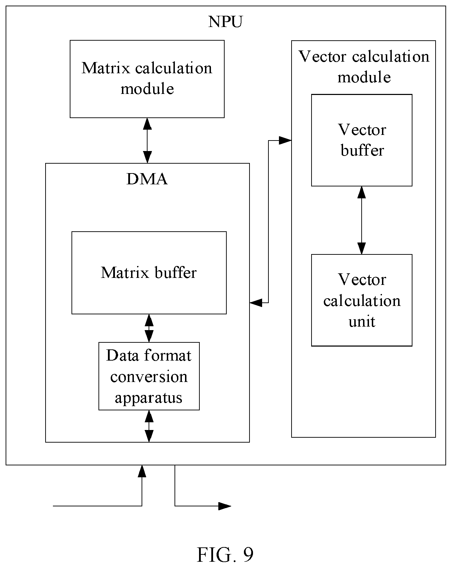

FIG. 9 is a block diagram of a hardware architecture of an application scenario according to an embodiment of this application. As shown in FIG. 9, a hardware architecture of an NPU in an application scenario of the data format conversion apparatus in this application may include: a DMA module, a matrix calculation module, a vector calculation module, and the like. The DMA module is configured to exchange data between the NPU and the outside, and buffer data. The matrix calculation module is configured to perform matrix calculation. The vector calculation module is configured to perform vector calculation. The data format conversion apparatus in this application may be located in the DMA module.

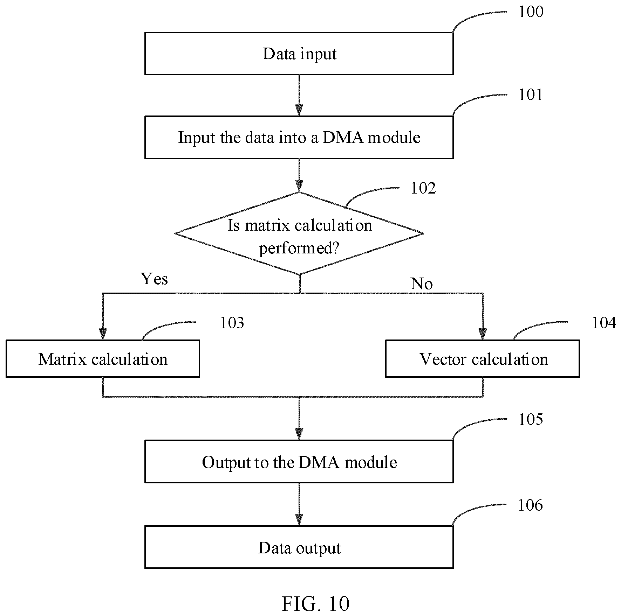

FIG. 10 is a flowchart of a process of running a neural network in an NPU according to an embodiment of this application. As shown in FIG. 10, when the neural network is run on the NPU, the NPU reads original tensor data from an external bus through a DMA module. Tensor data read each time passes through the DMA module, and a data format conversion apparatus in the DMA module performs data format conversion on the input tensor data, and stores converted tensor data into a matrix buffer RAM in the DMA module. The DMA module determines whether matrix calculation is performed on the input data. If the matrix calculation is performed, the DMA module transfers the converted tensor data to a matrix calculation module for calculation. After the calculation is completed, a first calculation result is obtained. The DMA module stores the first calculation result from the matrix calculation module into the data format conversion apparatus in the DMA module, performs data format conversion through the data format conversion apparatus to obtain a converted first calculation result, and outputs the converted first calculation result to the NPU, to complete a complete operation process. If the DMA module determines that the matrix calculation is not performed on the input data, vector calculation needs to be performed. The converted tensor calculation module is transferred from the matrix buffer to a vector calculation module (a vector buffer), and a second calculation result is obtained after the vector calculation is performed. The DMA module stores the second calculation result from the vector calculation module into the data format conversion apparatus in the DMA module, performs data format conversion through the data format conversion apparatus to obtain a converted second calculation result, and outputs the converted second calculation result to the NPU, to complete a complete operation process.

It can be learned from the foregoing content that the data format conversion apparatus in the DMA module needs to perform data format conversion on the input tensor data and the output tensor data.

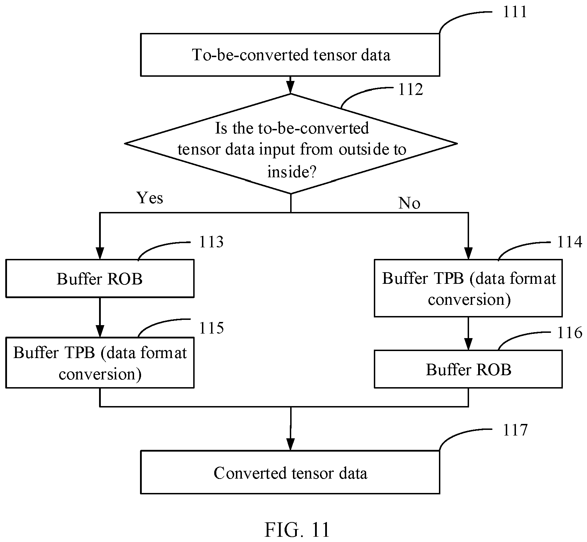

FIG. 11 is a flowchart of data format conversion according to an embodiment of this application. As shown in FIG. 11, a DMA may first determine whether to-be-converted tensor data is input from the outside of an NPU to the inside of the NPU, or is output from the inside of the NPU to the outside of the NPU. If the DMA determines that the to-be-converted tensor data is input from the outside of the NPU to the inside of the NPU, as shown in FIG. 3 and FIG. 11, the DMA may first buffer the read to-be-converted tensor data into the ROB, and transmit the read to-be-converted tensor data to the TPB for data format conversion to obtain converted tensor data. If the DMA determines that the to-be-converted tensor data is output from the inside of the NPU to the outside of the NPU, as shown in FIG. 3 and FIG. 11, the DMA may first buffer the read to-be-converted tensor data into the TPB for data format conversion, and buffer the to-be-converted tensor data buffered in the TPB into the ROB in the foregoing manner, to obtain converted tensor data.

An example in which an external data format of the NPU is NHWC and an internal data format of the NPU is NC1HWCO is used to describe a data format conversion process in this embodiment of this application. It is assumed that a bus bit width is 256B, a minimum unit for splitting is 32B, and CO in a data format of fp16 data is 16. Specific values of the bus bit width and the minimum unit for splitting are merely examples, and are not intended to limit this application in any manner.

NHWC is converted to NC1HWC0.

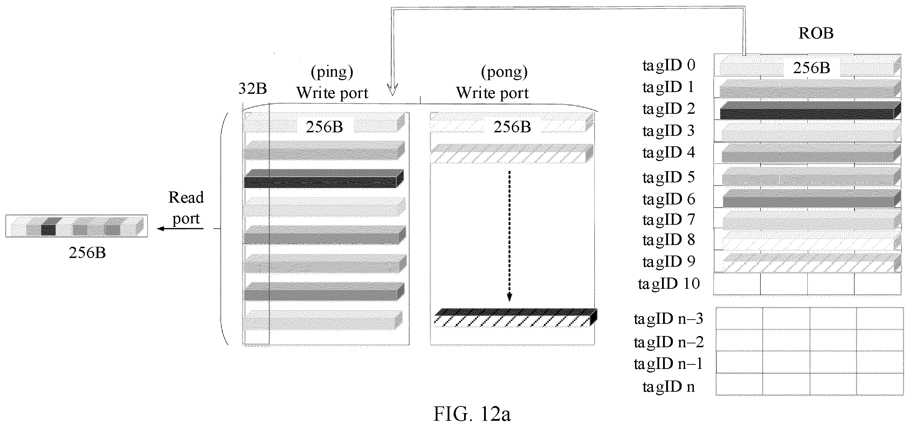

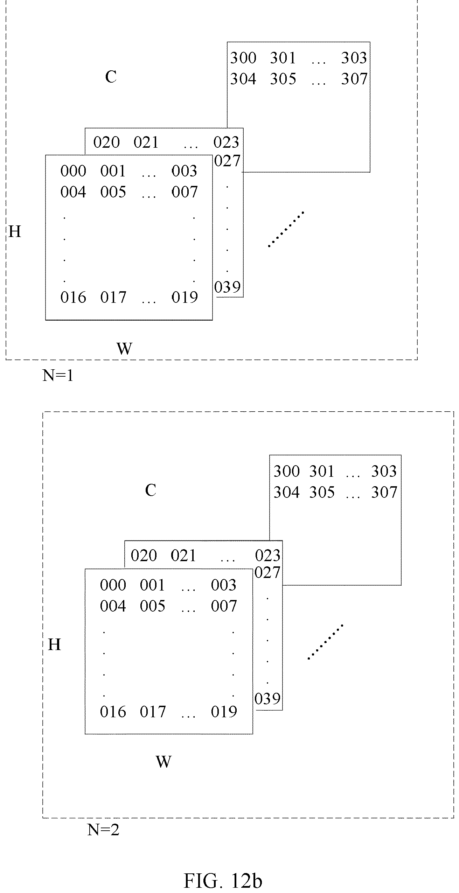

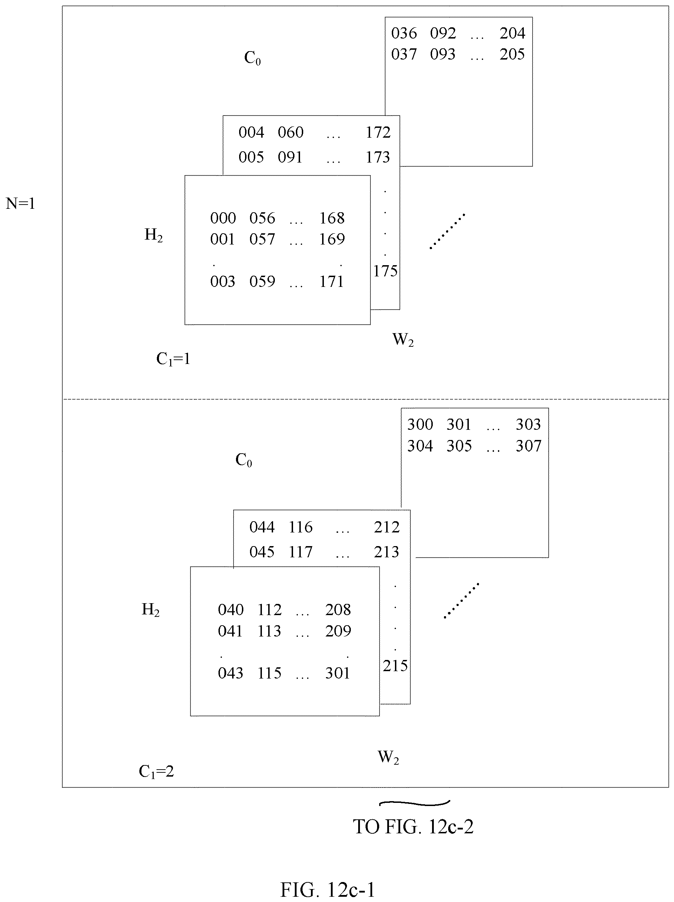

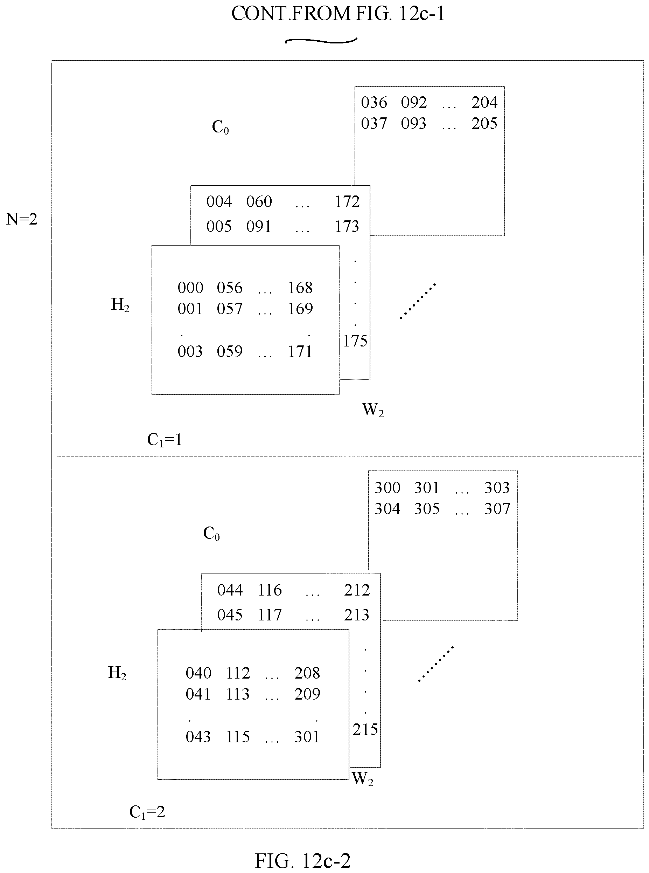

FIG. 12a is a schematic diagram of a format conversion process of tensor data according to an embodiment of this application. FIG. 12b and FIG. 12c-1 and FIG. 12c-2 are each a schematic diagram of tensor data according to an embodiment of this application.

In this embodiment, it is assumed that the tensor data shown in FIG. 12b is to-be-converted tensor data, and the tensor data shown in FIG. 12c-1 and FIG. 12c-2 is converted tensor data. As shown in FIG. 12b, the to-be-converted tensor data is stored in an order of C->W->H->N outside the NPU, and C1 is located in a dimension higher than H and W. HWC may be first converted, and the conversion is performed one by one in an N direction. During bus transmission, a cascading manner of a specific quantity of data blocks in H and W directions may be first determined based on a splitting width and a read port bit width, and a read request may be generated based on the cascading manner and a bus bit width. The read request is used to read a part of data of the to-be-converted tensor data. Because tensor data is transmitted based on the bus bit width burst during data transmission, a size of the part of data read based on the read request may be greater than the bus bit width. Therefore, a plurality of read commands may be sent to read the tensor data. It is assumed that burst is 256B. To avoid reading data out-of-order, the read commands are sent in a cascading order based on the bus bit width (burst), and tagID indicates an order of a sent read command. After receiving data, the NPU first transmits the read tensor data to the ROB based on the tagID. Then, the NPU reads the tensor data from the ROB in an order of the tagID, and stores the tensor data into the TPB through the write port of the TPB in a reading order in a vertical direction.

When the vertical manner of the TPB meets the read port bit width, the tensor data is read from each row of buffer of the TPB based on the splitting bit width of 32B, the data is spliced in an order of the vertical direction, and output horizontally one piece by one piece. The data is stored in the matrix buffer in an output order. In this way, the data format conversion is completed. Format conversion of the entire NHWC data is completed based on the procedure. A data format of the converted tensor data is shown in FIG. 12c-1 and FIG. 12c-2. The converted tensor data is stored in the NPU in an order of C0->W->H->Cl ->N.

NC1HWC0 is converted to NHWC.

FIG. 13 is a schematic diagram of a format conversion process of tensor data according to an embodiment of this application. In this embodiment, it is assumed that the tensor data shown in FIG. 12b is converted tensor data, and the tensor data shown in FIG. 12c-1 and FIG. 12c-2 is to-be-converted tensor data. As shown in FIG. 12c-1 and FIG. 12c-2, the to-be-converted tensor data is stored in the NPU in an order of CO->W->H->C1->N. When the data format is converted from NC1HWC0 into NHWC, data C1HWC0 inside the NPU is read one piece by one piece in an N direction and written in a vertical direction through the write port of the TPB. When the read port of the TPO meets the bus bit width, C1 and C0 of data in a longitudinal direction are combined into C and output to the ROB one piece by one piece in a horizontal direction. Then, the data is output to the outside of the NPU from the ROB through a bus. The to-be-converted tensor data is stored in the order of C->W->H->N outside the NPU, as shown in FIG. 12b.

Based on the data format conversion apparatus and the application example, this application further provides a data format conversion method. The method is applied to a direct memory access DMA controller DMAC of a DMA module of a processor, a data format that is of tensor data and that is supported by the processor is a first data format, and the method includes:
if a second data format of tensor data stored in an external memory is different from the first data format, converting, in a process of transmitting to-be-converted tensor data between a memory of the processor and the external memory, the to-be-converted tensor data from the first data format into the second data format or from the second data format into the first data format, to obtain converted tensor data, where the first data format and the second data format respectively indicate a placement manner of the to-be-converted tensor data or the converted tensor data when the to-be-converted tensor data or the converted tensor data is stored.

In a possible implementation, the converting, in a process of transmitting to-be-converted tensor data between a memory of the processor and the external memory, the to-be-converted tensor data from the first data format into the second data format or from the second data format into the first data format may include: if the to-be-converted tensor data is tensor data stored in the external memory, converting the to-be-converted tensor data from the second data format into the first data format in a process of reading the to-be-converted tensor data into the memory; or if the to-be-converted tensor data is tensor data in the memory, converting the to-be-converted tensor data from the first data format into the second data format in a process of outputting the to-be-converted tensor data to the external memory.

In this embodiment of this application, a data format of tensor data is converted in a data transfer process. Compared with a manner in which original data is first read from the external memory into a buffer of a vector processing unit before an operation is performed, converted data is output to the external memory after the vector processing unit converts a data format of the original data, and the data is read from the external memory again during the operation in the conventional technology, data transmission overheads and time and hardware overheads generated during vector calculation in the conventional technology can be reduced, and efficiency of running a neural network model on a neural network processor can be greatly improved. Compared with a manner in which a data format is unified in a network convergence manner and the data format is converted offline in the conventional technology, the data format conversion apparatus in this embodiment of this application can reduce offline preprocessing time overheads, and a process of reading and writing tensor data may be preconfigured based on a data format supported by the processor and a data format of tensor data stored in the external memory. When the data format conversion apparatus works with a general-purpose software framework, internal format details are hidden, and a unified data format is presented to the outside, so that a developer does not need to understand a requirement of the processor for the data format. This facilitates popularization and use of the processor.

In a possible implementation, the DMA module further includes a transpose buffer TPB, where the TPB includes a write port and a read port, and the converting, in a process of transmitting to-be-converted tensor data between a memory of the processor and the external memory, the to-be-converted tensor data from the first data format into the second data format or from the second data format into the first data format, to obtain converted tensor data includes:
writing the to-be-converted tensor data into the TPB through the write port in a first direction, when a product of a quantity of rows of data stored in the first direction of the TPB and a splitting width meets a read port bit width, reading a first part of data of the to-be-converted tensor data from the TPB through the read port in a second direction at the splitting width, and splicing and storing the first part of data in an order of the first direction, to obtain the converted tensor data, where the splitting width is a parameter for splitting data in one dimensional direction of the to-be-converted tensor data, and the first direction is perpendicular to the second direction. For a specific process, refer to the foregoing descriptions and FIG. 1.

Based on the foregoing example, in this embodiment of this application, the transpose buffer TPB is disposed in the DMA module, and ports for writing and reading in different directions are disposed in the TPB, so that a data format of tensor data can be converted in a data transfer process. This can reduce the data transmission overheads, the offline preprocessing time overheads of data format conversion, and the vector calculation time and hardware overheads in the conventional technology, and greatly improve the efficiency of running the neural network model on the neural network processor

In addition, according to the data format conversion method provided in this application, when the data format conversion method is used in combination with a general-purpose software framework, internal format details are hidden, and a unified data format is presented to the outside, so that a developer does not need to understand a requirement of a hardware architecture for a data format. This facilitates popularization and use of the processor.

In a possible implementation, the TPB includes a first buffer and a second buffer, the first buffer includes a first write port and a first read port, the second buffer includes a second write port and a second read port, and the writing the to-be-converted tensor data into the TPB through the write port in a first direction, and when a product of a quantity of rows of data stored in the first direction of the TPB and a splitting width meets a read port bit width, reading a first part of data of the to-be-converted tensor data from the TPB through the read port in a second direction at the splitting width includes:
reading the first part of data of the to-be-converted tensor data in the TPB from the second buffer through the second read port in the second direction at the splitting width when writing the to-be-converted tensor data into the first buffer through the first write port in the first direction; or
reading the first part of data of the to-be-converted tensor data in the TPB from the first buffer through the first read port in the second direction at the splitting width when writing the to-be-converted tensor data into the second buffer through the second write port in the first direction.

Reading and writing can be implemented in parallel by using the buffer of the ping-pong structure, to improve the data format conversion and transmission efficiency. For a specific process, refer to the foregoing descriptions and FIG. 2.

In a possible implementation, the DMA module further includes: a reorder buffer ROB, and when the to-be-converted tensor data is to-be-read tensor data stored in the external memory, the method further includes:
determining a cascading manner based on the to-be-converted tensor data, the splitting width, and the read port bit width, where the cascading manner is a manner of combining two dimensions higher than a lowest dimension of the to-be-converted tensor data;
generating, based on the cascading manner and/or a bus bit width, a read request for reading the to-be-converted tensor data, where the read request is used to read first tensor data, and the first tensor data is at least a part of data of the to-be-converted tensor data; and
sending a read command in a preset order based on the read request and the bus bit width, where the read command carries a number specified in the preset order, and the preset order is an order from a lower dimension to a higher dimension based on the two dimensions; and
the read command is used to read second tensor data in the first tensor data, the second tensor data is at least a part of data of the first tensor data, and the number carried in the read command indicates an order of writing the second tensor data into the ROB.

In a possible implementation, the method may further include: receiving the second tensor data corresponding to the read command, where the second tensor data carries the number of the corresponding read command, and writing the second tensor data into the ROB based on the number of the read command carried in the second tensor data. For the foregoing process of reading data from the external memory, refer to the foregoing descriptions and some descriptions in FIG. 3, FIG. 4a, FIG. 4b, FIG. 5a, FIG. 5b, and FIG. 6.

In a possible implementation, the converting, in a process of transmitting to-be-converted tensor data between a memory of the processor and the external memory, the to-be-converted tensor data from the first data format into the second data format or from the second data format into the first data format, to obtain converted tensor data includes:
reading the second tensor data from the ROB in an order of the number, and writing the second tensor data into the TPB through the write port in the first direction; and
reading, when the product of the quantity of rows of data stored in the first direction of the TPB and the splitting width meets the read port bit width, a second part of data of the second tensor data from the TPB through the read port in the second direction at the splitting width, splicing the second part of data in the order of the first direction, and storing the spliced second part of data into a matrix buffer of the DMA module, to obtain the converted tensor data.

The ROB is disposed in the DMA module, and it can also be ensured that data is read and written in sequence in a scenario of out-of-order reading of a bus.

In a possible implementation, the read command further includes a logical address of the second tensor data and a size of the second tensor data, where the size of the second tensor data is less than or equal to the bus bit width; and the logical address included in the read command changes with a dimension other than the lowest dimension of the to-be-read tensor data based on an order of the number carried in the read command.

In a possible implementation, the method further includes: when a remainder of a quantity of lowest dimensions of the to-be-read tensor data and a quantity of pieces of data corresponding to the splitting width is greater than 0, performing supplementation processing on the lowest dimension based on the quantity of pieces of data corresponding to the splitting width and the remainder.

Data in any dimension can be split through supplementation processing, to implement conversion of tensor data in any dimension. This is applicable to a plurality of conversion scenarios. In addition, data can be continuously transferred after being supplemented, thereby improving data transfer efficiency and improving bus utilization.

In a possible implementation, the DMA module further includes: a reorder buffer ROB, and when the to-be-converted tensor data is to-be-output tensor data stored in a matrix buffer of the DMA module, the converting, in a process of transmitting to-be-converted tensor data between a memory of the processor and the external memory, the to-be-converted tensor data from the first data format into the second data format or from the second data format into the first data format includes:
sequentially reading the to-be-output tensor data from the matrix buffer based on a bus bit width, and writing the to-be-output tensor data into the TPB through the write port in the first direction; and
reading, when the product of the quantity of rows of data stored in the first direction of the TPB and the splitting width meets the read port bit width, a third part of data of the to-be-output tensor data from the TPB through the read port in the second direction at the splitting width, splicing the third part of data in the order of the first direction to obtain third tensor data, and storing the third tensor data into the ROB in an order of reading the third tensor data from the read port.

In the foregoing process, a data format of tensor data can be converted in a process of outputting the tensor data inside the NPU, so that the data transmission overheads, the offline preprocessing time overheads of data format conversion, and the vector calculation time and hardware overheads in the conventional technology can be reduced, and the efficiency of running the neural network model on the neural network processor can be greatly improved.

In a possible implementation, the method further includes: generating a write command based on the third tensor data stored in the ROB, where the write command carries a number that is specified based on an order of storing the third tensor data into the ROB, and the number carried in the write command indicates an order of writing the third tensor data into the external memory of the processor

In a possible implementation, when a lowest dimension of the to-be-output tensor data is different from a preset lowest dimension, before the storing the third tensor data into the ROB, the method further includes: deleting a supplemented part of the third tensor data based on the lowest dimension of the to-be-output tensor data and the preset lowest dimension.

An embodiment of this application provides a data format conversion apparatus, including: a processor and a memory configured to store instructions executable by the processor. The processor is configured to execute the instructions to implement the foregoing method.

An embodiment of this application provides a non-volatile computer-readable storage medium, storing computer program instructions. The computer program instructions, when executed by a processor, implement the foregoing method.

An embodiment of this application provides a computer program product, including computer-readable code or a non-volatile computer-readable storage medium carrying the computer-readable code. When the computer-readable code is run in a processor of an electronic device, the processor in the electronic device performs the foregoing method.

The computer-readable storage medium may be a tangible device that can retain and store instructions for use by an instruction execution device. The computer-readable storage medium may be, for example, but is not limited to, an electrical storage device, a magnetic storage device, an optical storage device, an electromagnetic storage device, a semiconductor storage device, or any suitable combination thereof. More specific examples (non-exhaustive list) of the computer-readable storage medium include: a portable computer disk, a hard disk drive, a random access memory (Random Access Memory, RAM), a read-only memory (Read-Only Memory, ROM), an erasable programmable read-only memory (Electrically Programmable Read-Only-Memory, EPROM or a flash memory), a static random access memory (Static Random Access Memory, SRAM), a portable compact disc read-only memory (Compact Disc Read-Only Memory, CD-ROM), a digital versatile disc (Digital Video Disc, DVD), a memory stick, a floppy disk, a mechanical coding device, for example, a punching card or a groove protrusion structure that stores instructions, and any suitable combination thereof.

The computer-readable program instructions or code described herein may be downloaded from a computer-readable storage medium to each computing/processing device, or downloaded to an external computer or an external storage device over a network, for example, the Internet, a local area network, a wide area network, and/or a wireless network. The network may include a copper transmission cable, optical fiber transmission, wireless transmission, a router, a firewall, a switch, a gateway computer, and/or an edge server. A network adapter card or network interface in each computing/processing device receives the computer-readable program instructions from the network, and forwards the computer-readable program instructions for storage in a computer-readable storage medium in each computing/processing device.

The computer program instructions used to perform operations in this application may be assembly instructions, instruction set architecture (Instruction Set Architecture, ISA) instructions, machine instructions, machine-related instructions, microcode, firmware instructions, status setting data, or source code or target code written in one programming language or any combination of a plurality of programming languages. The programming languages include object-oriented programming languages such as Smalltalk and C++, and conventional procedural programming languages such as "C" or a similar programming language. The computer-readable program instructions may be executed entirely on a user computer, partly on the user computer, as a stand-alone software package, partly on the user computer and partly on a remote computer, or entirely on the remote computer or a server. When the remote computer is used, the remote computer may be connected to the user computer over any type of network, including a local area network (Local Area Network, LAN) or a wide area network (Wide Area Network, WAN), or may be connected to an external computer (for example, connected by using an internet service provider over the Internet). In some embodiments, an electronic circuit, for example, a programmable logic circuit, a field-programmable gate array (Field-Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or block diagrams of the method, the apparatus (system), and the computer program product according to embodiments of this application. It should be understood that each block of the flowcharts and/or block diagrams and a combination of blocks in the flowcharts and/or block diagrams may be implemented by the computer-readable program instructions.

These computer-readable program instructions may be provided to a processor of a general-purpose computer, a special-purpose computer, or another programmable data processing apparatus to produce a machine, so that the instructions, when executed by the processor of the computer or the another programmable data processing apparatus, create an apparatus for implementing functions/actions specified in one or more blocks in the flowcharts and/or block diagrams. These computer-readable program instructions may alternatively be stored in the computer-readable storage medium. These instructions enable a computer, a programmable data processing apparatus, and/or another device to work in a specific manner Therefore, the computer-readable medium storing the instructions includes an artifact that includes instructions for implementing various aspects of the functions/actions specified in the one or more blocks in the flowcharts and/or the block diagrams.

The computer-readable program instructions may alternatively be loaded onto a computer, another programmable data processing apparatus, or another device, so that a series of operation steps are performed on the computer, the another programmable data processing apparatus, or the another device to produce a computerimplemented process. Therefore, the instructions executed on the computer, the another programmable data processing apparatus, or the another device implements the functions/actions specified in the one or more blocks in the flowcharts and/or block diagrams.

The flowcharts and the block diagrams in the accompanying drawings illustrate system architectures, functions, and operations of possible implementations of apparatuses, systems, methods, and computer program products according to a plurality of embodiments of this application. In this regard, each block in the flowcharts or block diagrams may represent a module, a program segment, or a part of the instructions, and the module, the program segment, or the part of the instructions includes one or more executable instructions for implementing a specified logical function. In some alternative implementations, a function marked in the block may also occur in a sequence different from that marked in the accompanying drawings. For example, two continuous blocks may actually be executed substantially in parallel, and may sometimes be executed in a reverse order, depending on a function involved.

It should also be noted that each block in the block diagrams and/or the flowcharts, and combinations of the blocks in the block diagrams and/or the flowcharts may be implemented by hardware (for example, a circuit or an ASIC (Application Specific Integrated Circuit, application-specific integrated circuit)) that performs a corresponding function or action, or may be implemented by a combination of the hardware and software, for example, firmware.

Although the present invention is described with reference to embodiments, in a process of implementing the present invention that claims protection, a person skilled in the art may understand and implement another variation of the disclosed embodiments by viewing the accompanying drawings, disclosed content, and the appended claims. In the claims, "comprising" (comprising) does not exclude another component or another step, and " a" or "one" does not exclude a case of multiple. A single processor or another unit may implement several functions enumerated in the claims. Some measures are recorded in dependent claims that are different from each other, but this does not mean that these measures cannot be combined to produce a better effect.

Embodiments of this application are described above. The foregoing descriptions are examples, not exhaustive, and not limited to the foregoing disclosed embodiments. Many modifications and changes are apparent to a person of ordinary skill in the art without departing from the scope of the illustrated embodiments. Selection of terms used in this specification is intended to best explain embodiment principles, actual application, or improvements to technologies in the market, or to enable another person of ordinary skill in the art to understand the embodiments disclosed in this specification.

## Claims

1. A data format conversion apparatus, wherein the data format conversion apparatus is located in a direct memory access DMA module of a processor, a data format that is of tensor data and that is supported by the processor is a first data format, and the DMA module further comprises: a DMA controller DMAC; and
if a second data format of tensor data stored in an external memory is different from the first data format, the DMAC is configured to convert, in a process of transmitting to-be-converted tensor data between a memory of the processor and the external memory, the to-be-converted tensor data from the first data format into the second data format or from the second data format into the first data format, to obtain converted tensor data, wherein
the first data format and the second data format respectively indicate a placement manner of the to-be-converted tensor data or the converted tensor data when the to-be-converted tensor data or the converted tensor data is stored.

2. The conversion apparatus according to claim 1, wherein the data format conversion apparatus comprises: a transpose buffer TPB, and the TPB comprises a write port and a read port; and
the DMAC is configured to: write the to-be-converted tensor data into the TPB through the write port in a first direction, when a product of a quantity of rows of data stored in the first direction of the TPB and a splitting width meets a read port bit width, read a first part of data of the to-be-converted tensor data from the TPB through the read port in a second direction at the splitting width, and splice and store the first part of data in an order of the first direction, to obtain the converted tensor data, wherein
the splitting width is a parameter for splitting data in one dimensional direction of the to-be-converted tensor data, and the first direction is perpendicular to the second direction.

3. The apparatus according to claim 2, wherein the TPB comprises a first buffer and a second buffer, the first buffer comprises a first write port and a first read port, and the second buffer comprises a second write port and a second read port; and
the DMAC is configured to read the first part of data of the to-be-converted tensor data in the TPB from the second buffer through the second read port in the second direction at the splitting width when writing the to-be-converted tensor data into the first buffer through the first write port in the first direction, and splice the first part of data in the order of the first direction; or
the DMAC is configured to read the first part of data of the to-be-converted tensor data in the TPB from the first buffer through the first read port in the second direction at the splitting width when writing the to-be-converted tensor data into the second buffer through the second write port in the first direction, and splice the first part of data in the order of the first direction.

4. The apparatus according to claim 2 or 3, wherein the data format conversion apparatus further comprises: a reorder buffer ROB, and the to-be-converted tensor data is to-be-read tensor data stored in the external memory of the data format conversion apparatus;
the DMAC is configured to determine a cascading manner based on the to-be-converted tensor data, the splitting width, and the read port bit width, wherein the cascading manner is a manner of combining two dimensions higher than a lowest dimension of the to-be-converted tensor data;
the DMAC is configured to generate, based on the cascading manner and/or the bus bit width, a read request for reading the to-be-converted tensor data, wherein the read request is used to read first tensor data, and the first tensor data is at least a part of data of the to-be-converted tensor data;
the DMAC is configured to send a read command in a preset order based on the read request and the bus bit width, wherein the read command carries a number specified in the preset order, and the preset order is an order from a lower dimension to a higher dimension based on the two dimensions; and
the read command is used to read second tensor data in the first tensor data, the second tensor data is at least a part of data of the first tensor data, and the number carried in the read command indicates an order of writing the second tensor data into the ROB.

5. The apparatus according to claim 4, wherein
the DMAC is further configured to: read the second tensor data from the ROB in an order of the number, and write the second tensor data into the TPB through the write port in the first direction; and
the DMAC is further configured to read, when the product of the quantity of rows of data stored in the first direction of the TPB and the splitting width meets the read port bit width, a second part of data of the second tensor data from the TPB through the read port in the second direction at the splitting width, splice the second part of data in the order of the first direction, and store spliced second part of data into a matrix buffer of the DMA module.

6. The apparatus according to claim 4, wherein the read command further comprises a logical address of the second tensor data and/or a size of the second tensor data, and
the size of the second tensor data is less than or equal to the bus bit width; and
the logical address comprised in the read command changes with a dimension other than the lowest dimension of the to-be-read tensor data based on an order of the number carried in the read command.

7. The apparatus according to claim 6, wherein when a remainder of a quantity of lowest dimensions of the to-be-read tensor data and a quantity of pieces of data corresponding to the splitting width is greater than 0, the DMAC is configured to perform supplementation processing on the lowest dimension based on the quantity of pieces of data corresponding to the splitting width and the remainder.

8. The apparatus according to claim 2 or 3, wherein the data format conversion apparatus further comprises: a reorder buffer ROB, and the to-be-converted tensor data is to-be-output tensor data stored in a matrix buffer of the DMA module; and
the DMAC is configured to: sequentially read the to-be-output tensor data from the matrix buffer based on a bus bit width, and write the to-be-output tensor data into the TPB through the write port in the first direction;
the DMAC is configured to read, when the product of the quantity of rows of data stored in the first direction of the TPB and the splitting width meets the read port bit width, a third part of data of the to-be-output tensor data from the TPB through the read port in the second direction at the splitting width, splice the third part of data in the order of the first direction to obtain third tensor data, and store the third tensor data into the ROB in an order of reading the third tensor data from the read port; and
the DMAC is configured to generate a write command based on the third tensor data stored in the ROB, wherein the write command carries a number that is specified based on an order of storing the third tensor data into the ROB, and the number carried in the write command indicates an order of writing the third tensor data into the external memory of the processor

9. The apparatus according to claim 8, wherein when a lowest dimension of the to-be-output tensor data is different from a preset lowest dimension, the DMAC is configured to delete a supplemented part of the third tensor data based on the lowest dimension of the to-be-output tensor data and the preset lowest dimension before storing the third tensor data into the ROB.

10. A processor, wherein the processor comprises the data format conversion apparatus according to any one of claims 1 to 9.

11. A data format conversion method, wherein the method is applied to a direct memory access DMA controller DMAC of a DMA module of a processor, a data format that is of tensor data and that is supported by the processor is a first data format, and the method comprises:
if a second data format of tensor data stored in an external memory is different from the first data format, converting, in a process of transmitting to-be-converted tensor data between a memory of the processor and the external memory, the to-be-converted tensor data from the first data format into the second data format or from the second data format into the first data format, to obtain converted tensor data, wherein
the first data format and the second data format respectively indicate a placement manner of the to-be-converted tensor data or the converted tensor data when the to-be-converted tensor data or the converted tensor data is stored.

12. The method according to claim 11, wherein the DMA module further comprises: a transpose buffer TPB, the TPB comprises a write port and a read port, and
the converting, in a process of transmitting to-be-converted tensor data between a memory of the processor and the external memory, the to-be-converted tensor data from the first data format into the second data format or from the second data format into the first data format, to obtain converted tensor data comprises:
writing the to-be-converted tensor data into the TPB through the write port in a first direction, when a product of a quantity of rows of data stored in the first direction of the TPB and a splitting width meets a read port bit width, reading a first part of data of the to-be-converted tensor data from the TPB through the read port in a second direction at the splitting width, and splicing and storing the first part of data in an order of the first direction, to obtain the converted tensor data, wherein
the splitting width is a parameter for splitting data in one dimensional direction of the to-be-converted tensor data, and the first direction is perpendicular to the second direction.

13. The method according to claim 12, wherein the TPB comprises a first buffer and a second buffer, the first buffer comprises a first write port and a first read port, the second buffer comprises a second write port and a second read port, and
the writing the to-be-converted tensor data into the TPB through the write port in a first direction, and when a product of a quantity of rows of data stored in the first direction of the TPB and a splitting width meets a read port bit width, reading a first part of data of the to-be-converted tensor data from the TPB through the read port in a second direction at the splitting width comprises:
reading the first part of data of the to-be-converted tensor data in the TPB from the second buffer through the second read port in the second direction at the splitting width when writing the to-be-converted tensor data into the first buffer through the first write port in the first direction; or
reading the first part of data of the to-be-converted tensor data in the TPB from the first buffer through the first read port in the second direction at the splitting width when writing the to-be-converted tensor data into the second buffer through the second write port in the first direction.

14. The method according to claim 12 or 13, wherein the DMA module further comprises: a reorder buffer ROB, and
when the to-be-converted tensor data is to-be-read tensor data stored in the external memory, the method further comprises:
determining a cascading manner based on the to-be-converted tensor data, the splitting width, and the read port bit width, wherein the cascading manner is a manner of combining two dimensions higher than a lowest dimension of the to-be-converted tensor data;
generating, based on the cascading manner and/or the bus bit width, a read request for reading the to-be-converted tensor data, wherein the read request is used to read first tensor data, and the first tensor data is at least a part of data of the to-be-converted tensor data; and
sending a read command in a preset order based on the read request and the bus bit width, wherein the read command carries a number specified in the preset order, and the preset order is an order from a lower dimension to a higher dimension based on the two dimensions; and
the read command is used to read second tensor data in the first tensor data, the second tensor data is at least a part of data of the first tensor data, and the number carried in the read command indicates an order of writing the second tensor data into the ROB.

15. The method according to claim 14, wherein the converting, in a process of transmitting to-be-converted tensor data between a memory of the processor and the external memory, the to-be-converted tensor data from the first data format into the second data format or from the second data format into the first data format, to obtain converted tensor data comprises:
reading the second tensor data from the ROB in an order of the number, and writing the second tensor data into the TPB through the write port in the first direction; and
reading, when the product of the quantity of rows of data stored in the first direction of the TPB and the splitting width meets the read port bit width, a second part of data of the second tensor data from the TPB through the read port in the second direction at the splitting width, splicing the second part of data in the order of the first direction, and storing the spliced second part of data into a matrix buffer of the DMA module, to obtain the converted tensor data.

16. The method according to claim 14, wherein the read command further comprises a logical address of the second tensor data and a size of the second tensor data, and the size of the second tensor data is less than or equal to the bus bit width; and
the logical address comprised in the read command changes with a dimension other than the lowest dimension of the to-be-read tensor data based on an order of the number carried in the read command.

17. The method according to claim 16, wherein the method further comprises:
when a remainder of a quantity of lowest dimensions of the to-be-read tensor data and a quantity of pieces of data corresponding to the splitting width is greater than 0, performing supplementation processing on the lowest dimension based on the quantity of pieces of data corresponding to the splitting width and the remainder.

18. The method according to claim 12 or 13, wherein the DMA module further comprises: a reorder buffer ROB, and
when the to-be-converted tensor data is to-be-output tensor data stored in a matrix buffer of the DMA module, the converting, in a process of transmitting to-be-converted tensor data between a memory of the processor and the external memory, the to-be-converted tensor data from the first data format into the second data format or from the second data format into the first data format comprises:
sequentially reading the to-be-output tensor data from the matrix buffer based on a bus bit width, and writing the to-be-output tensor data into the TPB through the write port in the first direction;
reading, when the product of the quantity of rows of data stored in the first direction of the TPB and the splitting width meets the read port bit width, a third part of data of the to-be-output tensor data from the TPB through the read port in the second direction at the splitting width, splicing the third part of data in the order of the first direction to obtain third tensor data, and storing the third tensor data into the ROB in an order of reading the third tensor data from the read port; and
generating a write command based on the third tensor data stored in the ROB, wherein the write command carries a number that is specified based on an order of storing the third tensor data into the ROB, and the number carried in the write command indicates an order of writing the third tensor data into the external memory of the processor

19. The method according to claim 18, wherein
if a lowest dimension of the to-be-output tensor data is different from a preset lowest dimension, before the storing the third tensor data into the ROB, the method further comprises: deleting a supplemented part of the third tensor data based on the lowest dimension of the to-be-output tensor data and the preset lowest dimension.

20. A data format conversion apparatus, comprising:
a processor; and
a memory, configured to store instructions executable by the processor, wherein
the processor is configured to implement the method according to any one of claims 11 to 19 when executing the instructions.

21. A non-volatile computer-readable storage medium, storing computer program instructions, wherein the computer program instructions, when executed by a processor, implement the method according to any one of claims 11 to 19.

22. A computer program product, comprising computer-readable code or a non-volatile computer-readable storage medium carrying the computer-readable code, wherein when the computer-readable code is run in an electronic device, a processor in the electronic device performs the method according to any one of claims 11 to 19.
